# EUROPEAN PATENT SPECIFICATION

(11) **EP 1 062 779 B1**
(45) Date of publication and mention of the grant of the patent: **08.02.2012**
(21) Application number: 99906381.1
(22) Date of filing: 11.03.1999
(51) Int. Cl.: H04L 29/06

(54) **Techniques for protection of data-communication networks**
Verfahren zur Absicherung von Datenvermittlungsnetzwerken
Techniques de protection pour réseaux de communication de données

(30) Priority: 12.03.1998 US 77697 P; 29.10.1998 US 106111 P
(43) Date of publication of application: 27.12.2000
(73) Proprietor: Whale Communications Ltd., 48091 Rosh-Ha'ayin (IL)
(72) Inventor: BARON, Elad, 48091 Rosh-Ha'ayin (IL)
(74) Representative: Mozzi, Matteo
(86) International application number: PCT/IB1999/000411
(87) International publication number: WO 1999/046882

(56) References cited:
- US-A- 5 021 949
- US-A- 5 021 949
- US-A- 5 305 317
- US-A- 5 610 905
- US-A- 5 613 090
- US-A- 5 706 286
- US-A- 5 706 286
- US-A- 5 706 286
- US-A- 5 732 360
- US-A- 5 790 541
- SAUNDERS S: "PUTTING A LOCK ON CORPORATE DATA" DATA COMMUNICATIONS, MCGRAW HILL. NEW YORK, US, vol. 25, no. 1, January 1996 (1996-01), page 78,80, XP000545249 ISSN: 0363-6399
- POHLMANN N: "GEGEN DEN GROSSEN LAUSCHANGRIFF" ELEKTROTECHNIK, VOGEL VERLAG K.G. WURZBURG, DE, vol. 79, no. 12, 15 December 1997 (1997-12-15), pages 76-80, XP000767359 ISSN: 1431-9578
- SAUNDERS S: "PUTTING A LOCK ON CORPORATE DATA", DATA COMMUNICATIONS, MCGRAW HILL. NEW YORK, US, vol. 25, no. 1, 1 January 1996 (1996-01-01), page 78,80, XP000545249, ISSN: 0363-6399
- POHLMANN N: "GEGEN DEN GROSSEN LAUSCHANGRIFF", ELEKTROTECHNIK, 331951 1, vol. 79, no. 12, 15 December 1997 (1997-12-15), pages 76-80, XP000767359, ISSN: 1431-9578

## Description

### TECHNICAL FIELD

The present invention relates to techniques for providing security in data-communication networks. More specifically, this invention is directed to techniques that provide protected connectivity between different networks to prevent an intruder from exploiting weakness in network protocol(s).

### BACKGROUND OF THE INVENTION

Currently, the public at large increasingly uses the Internet as a source of information and for communicating. Thus, many networks, which otherwise desire to maintain a high level of security, need to share or expose limited data/resources, or to import data from parties whom are not trusted, without opening a "hole" into their sensitive resources. For example, in electronic commerce (c-commerce) applications, a company maintaining an "Internet store" would like to expose the "Internet store", but definitely would not be willing to jeopardize the internal accounting database of the company by doing so. In another example, a telecommunication company may want to provide its clients with on-line monthly statements, but would not be willing to take the chance of a "hacker" hacking into their telecom switches through this on-line connection. In still another example, a classified military base might want to import weather forecast information without the possibility that sensitive information would leak outside.

Today's methods of connecting networks use technologies developed for general connectivity. These technologies consist of complex communication protocols that were developed to allow interoperability among different software and hardware elements, and to provide flexibility, diversity, robustness and transparency. A major example of such protocols is the TCP/IP (Transmission Control Protocol/Internet Protocol) family of protocols. Other examples of protocols are DECnet SNA and Novell. Security was not a dominant consideration while developing the technology for general connectivity. Furthermore, security and robustness arc, by nature, at least in part contradictory to each other. More specifically, the higher the complexity levels of a system, the greater the chances that it contains some vulnerability when attacked by a hacker.

US Patent Number 5,021,949 relates to to a data communication system to link end hosts, supporting the SNA protocol stack, by means of a packet switched network, e.g., based on the IP protocol stack.

US Patent Number 5,706,286 relates to to the interworking of different signalling protocols used by different telecommunication service providers, with particular reference to a SS7 gateway.

International Patent Application Number WO 97/24842 relates to a method and system for providing a resilient interconnection between two frame relay networks and/or two end networks, suitable to provide end-to-end resiliency when the end-to-end interconnection is supported by different networks, i.e., to ensure end-to-end resiliency between frame relay networks interconnected by a self-healing network.

Document by Saunders et al., "Putting a lock on corporate data" - Data Communications, McGraw-Hill, New York, vol. 25, no. 1 January 1996, pages 78-80 (XP545249) relates to a commercial router family providing improved security, by integrating firewall and encryption functions in a single apparatus.

Document "MS TCP/IP and Windows 95 Networking" (XP863891) is a technical paper related to the deployment and management of Microsoft TCP/IP on computers running Microsoft Windows 95, which discloses solutions about protocol isolation for Internet Security.

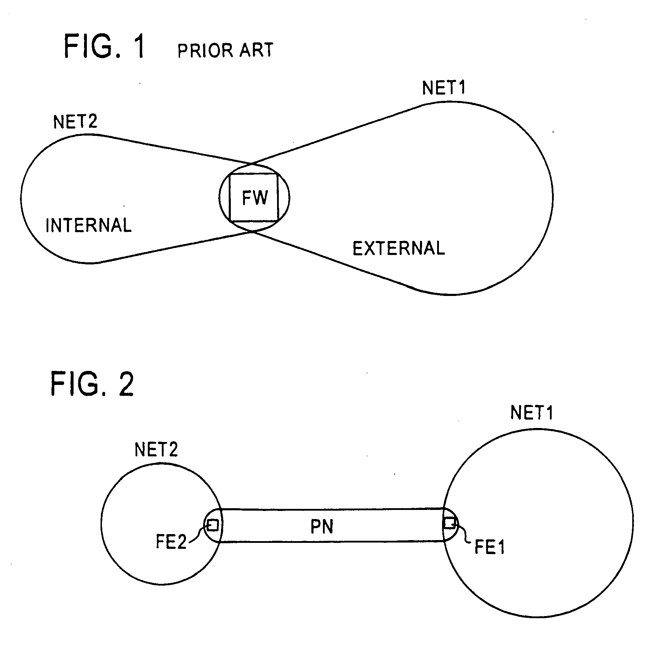

In order to address the deficiency of security in the general connectivity methods, firewalls were introduced which are generally implemented in complex software. A firewall is typically located at a network node that monitors all communication passing into the network from an external source such as another network. FIG. 1 illustrates an example of a firewall (FW) used to connect an internal network NET2 with an external network NET1. In this example, external network NET1 is a WAN (Wide Area Network) such as the Internet, and NET2 is a LAN (Local Area Network), although the principles of the invention apply to networks generally.

A significant purpose of firewall FW is to block communications from NET1, which are suspected to be hostile. However, this is a patch to the problem and not a real solution, for the following reasons:
1. The firewall is a node in the internal network NET2. As such, the firewall is susceptible to attacks on its operating system, protocols or applications by a hacker. Once the firewall node is taken over, the entire firewall functionality can be overridden and disabled by the hacker. Since the firewall is the last line of defense for entry into the network, when the firewall fails the internal network is exposed.
2. The firewall attempts to be transparent to applications and to be flexible enough for all the configurations the organization of NET2 may require. The firewall also relies entirely on a human to configure the firewall to separate "good" from "bad" communications. Since the needs of the organization using NET2 constantly change, the software configuration of the firewall is constantly changed to accommodate changing needs. As a result of frequent changes, the probability of a mistake being made that could compromise the security of the network increases.
3. The firewall itself must be a complicated system in order to "understand" the communication passing through it. As such, the firewall may contain software bugs or design flaws or unhandled cases that can be exploited by a hacker. In addition, sometimes it is impossible to determine if a communication is valid or not without having access to a broader context which may be unavailable to the firewall.
4. In order to accommodate regular and transparent connectivity, the firewall is usually allowed to pass all kinds of management and internal protocols. Since clients are often unaware of this, they may not take this into consideration when assessing the risks of using the firewall. For example, when importing a file into the network, it is usually necessary to configure the firewall so that it will allow FTP (File Transfer Protocol), TCP, DNS (Domain Name System), ICMP (Internet Control Message Protocol) and other control messages to pass through.

Hence, there is need for a new technology that is built with security in mind from the beginning, and which will provide a very specific and important kind of connectivity between an internal network and an external network.

### SUMMARY OF THE PRESENT INVENTION

The invention disclosed in the present application is a method for transmitting data in accordance with claim 1. It is also an object of the present invention a computer network in accordance with claim 43 and a machine readable medium in accordance with claim 71.

The word "network," is used in the present invention to be a group of nodes (e.g., computers, storage devices, printers, etc.) connected together using physical and electronic interconnections such that each node is connected to at least one other node either directly or through intermediate links and/or devices, with all nodes complying with certain pre-agreed upon rules generally known as "protocols". A participant node in the network can transfer information to other nodes in the network by complying with network protocols. The connection between source and target generally passes though other participant nodes in the network which route the information to its destination.

One aspect of the present invention involves isolating an internal network from an external network. Ideally, from a security point of view, the two networks should be disconnected. Practically, there needs to be some transport to carry selected information between the networks. To minimize the security risk, this transport should be as "dumb" and simple or "primitive" as possible. Consequently, the present invention introduces the concept of a "primitive network" which is a "barrier" between the internal network and the external network.

A "primitive network" should be understood to mean a network consisting of front-end nodes and optionally, intermediate nodes. The front-end nodes can comprise one or more computers or dedicated hardware. The primitive network (along with its associated protocols, and physical and electronic connections) provide the mechanism for one front-end node to transfer information to any other front-end node (hereinafter, front end or FE). The optional intermediate nodes may be used to assist in the security or flow of information from one front end to another front end.

In some embodiments of the invention, the primitive network follows the rule that there is no electrical connection between the inside of a protected network and the outside at any given time, i.e. the inside and outside are electrically isolated from one another.

An important feature of the primitive network barrier is "breaking" all layers of the protocols on both sides (i.e., the internal and external networks) while allowing selective data carried by those protocols to pass. The primitive network does not support the full protocol stack used in the internal and eternal networks, but may support an entirely different protocol.

Various advantages and features of the present invention will become more readily apparent to those skilled in the art from the following description thereof, especially when taken in conjunction with the accompanying drawings.

### BRIEF DESCRIPTION OF THE DRAWINGS

Reference is made to the attached drawings, wherein elements having the same reference numeral designations represent like elements throughout and wherein:
FIG. 1 is an illustration of an internal network connected to an external network using a firewall.
FIG. 2 is an illustration of the internal network connected to the external network with a primitive network according to the present invention.
FIG. 3 is an illustration of a client-server application connection for FIG. 2
FIG. 4 is an example of client-server application communication flow for FIG. 3.
FIG. 5 is an illustration of the difference in protocols between that of the internal and external networks, and that of the primitive network.
FIG. 6 is an illustration of a primitive network based on RS232 protocol.
FIG. 7 is an illustration of a primitive network including an intermediate node.
FIG. 8 is an illustration of the intermediate node of FIG. 7 as a memory medium.
FIG. 9 is an illustration of the intermediate node of FIG. 7 as a magnetic storage medium.
FIG. 10 is an illustration of the intermediate node of FIG. 7 as a computer.
FIG. 11 is an illustration of the intermediate node of FIG. 7 as a switchable device.
FIG. 11A is an illustration of a plurality of networks connected together with a primitive network have a switchable intermediate node.
FIG. 12 is an illustration of the switchable device of FIG. 11 as a disk drive.
FIG. 12A is an illustration of the switchable device of FIG. 11 as two-switched storage devices
FIG. 13 is an illustration of the intermediate node of FIG. 7 as a switchable storage device with additional security features.
FIG. 14 is an illustration of the intermediate node of FIG. 7 as a dual port storage device.
FIG. 15 is an illustration of filtering/modifying data at front ends of the primitive network.
FIG. 16 is an illustration of using two primitive networks to connect the internal network and external network.
FIG. 17 is an illustration of a primitive network having one way data flow.
FIG. 18 is another illustration of a primitive network having one way data flow.
FIG. 19 is an illustration of checking for continuity for the switchable device of FIG. 11.
FIG. 20 is another illustration of checking for continuity for the switchable device of FIG. 11.
FIG. 21 is a block diagram illustrating an implementation of the present invention as a switchable storage device.
FIG. 21A is a block diagram illustrating a first variation of FIG. 21.
FIG. 21B is a block diagram illustrating a second variation of FIG. 21.
FIGS. 22A and 22B are flow diagrams illustrating operation of a receiver driver and a sender driver in the unidirectional mode.
FIG. 23 is a block diagram illustrating an example of the storage device of FIG. 21.
FIG. 24 is a block diagram illustrating an example of the logic circuit of FIG. 21.
FIG. 25 is a block diagram illustrating an example of the switch of FIG. 21, 21A and 21B.
FIG. 26 is a diagram of circuitry for continuity checking.
FIG. 27 is a circuit diagram of an example of the detector of FIG. 26.
FIG. 28 is a diagram of another example of circuitry for continuity checking.

### DETAILED DESCRIPTION OF THE DRAWINGS

FIG. 2 illustrates an internal network NET2 (e.g., a LAN) connected to an external network NET1 (e.g., the Internet) using the primitive network PN of the present invention. Both NET1 and NET2 may support various known and/or standardized communications protocols, an example of which is the TCP/IP family of protocols. For the remainder of this description, it will be presumed for simplicity that both NET1 and NET2 use TCP/IP protocols, but it should be understood that NET1 and NET1 can operate with other types of protocols and that the protocols with which NET1 operates need not be the same as the protocols with which NET2 operates. It will be presumed for purposes of explanation that NET1 is the Internet and NET2 is a LAN although it should be understood that other types of network configurations are common and expected.

As noted earlier, the TCP/IP protocols are complex, as they were developed to allow interoperability between different software and hardware elements, and to provide flexibility, diversity, robustness and transparency. Because these protocols are complex, hackers who may connect to NET1 may find ways of "abusing" the protocols (i.e., manipulating the protocols to defeat normal operation) in order to allow them to gain unauthorized entry into NET2. As shown in FIG. 2, to counter such abuse of the protocols of NET1 and NET2, a third network, a protective network, PN, in accordance with the invention is provided which has a front end FE1 connected to NET1 and another front end FE2 connected to NET2. The protective network PN, typically employs a different communication protocol than that of either NET1 or NET2. As discussed more hereinafter, the protocol used in PN can vary. For example, SCSI (Small Computer Systems Interface), SCSI-2, SCSI-3, parallel data port, serial data port USB, RS-232, ethernet (IEEE802.3), token ring (IEEE802.5), FDDI, ATM, fiber channels, etc., or proprietary protocols can be used. While it is preferable that protocol used in the PN should be as simple and "primitive" (uncomplicated) as possible, it is not necessary. For example, it is possible for the PN to use an SNA (System Network Architecture) protocol, which is a complex protocol. All that is needed is for the primitive network to be designed and/or configured to make it practically impossible to take over any front end from any other nodes in the PN, and that it will not support the protocol stack of adjacent networks. For the remainder of this description, it will be presumed that PN uses the SCSI protocol.

FE1 and FE2 each comprise nodes on the primitive network as well as nodes on one or more adjacent networks; i.e., each is a gateway, sitting on 2 networks, and each can include commonly available computers or dedicated machines or hardware. A driver provides operative access to the primitive network. When communications are flowing from FE1 to FE2, one function of the driver in primitive network. When communications are flowing from FE1 to FE2, one function of the driver in the computer at FE1 is to strip the TCP/IP protocols from the data to be transmitted to NET2 and provide that data to the PN for transmission using protocol of the PN (e.g. the SCSI protocol). One function of the driver in FE2 is to strip the SCSI protocol and provide the data for encapsulation using the (exemplary) TCP/IP protocol for transmission over NET2 to the destination. Since communication between NET1 and NET2 in FIG. 2 is intended to be bi-directional, the computer at FE2 also strips the TCP/IP protocols from the data to be transmitted to NET1 and insert the data into the envelopes of the SCSI protocol, and the computer at FE1 also uses its driver to strip the SCSI protocol and format the data into the TCP/IP protocol for transmission over NET1 to the destination.

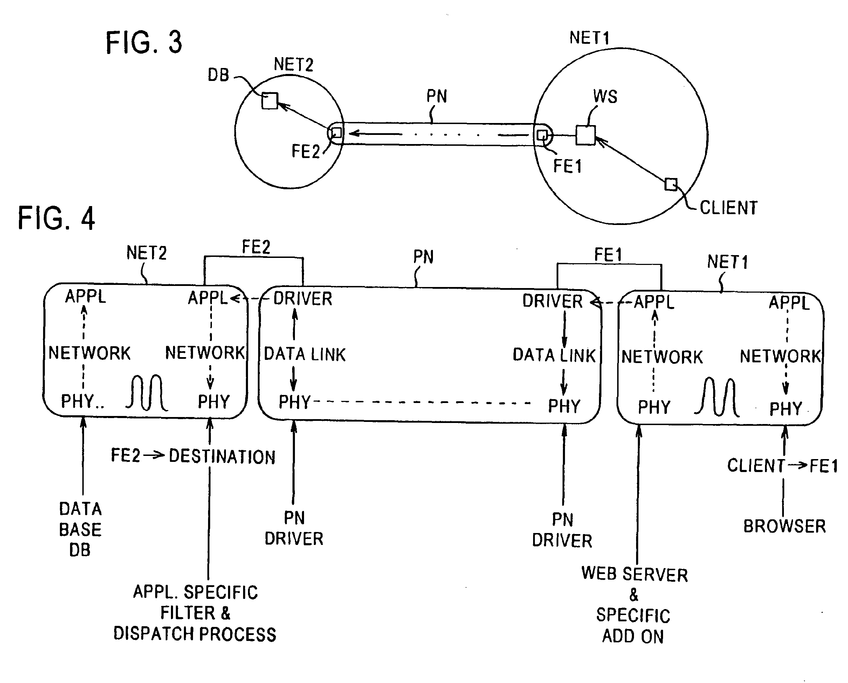

FIG. 3 illustrates a client-server application connection using the embodiment in FIG. 2, and FIG. 4 is an example of the communication flow for the client-server connection of FIG. 3. We have presumed for purposes of explanation that NET1 is the Internet and NET2 is a protected LAN in the description of many examples. These can be described using the OSI (Open Systems Interconnection) model that is used in the description of the invention. In the OSI framework, groups of protocols are arranged in layers, with each layer performing a specific data communications function. Conceptionally, OSI model is viewed as a vertical stack of layers (seven) with the highest layer being the application layer. At the lowest layer is the physical layer (PHY) which specifies the physical interconnection characteristics for the hardware for sending data over lines. In between these layers are five other layers, each of which specify a certain function. One of these layers is the network layer, which involves routing data packets over the network.

Referring to FIG. 3, assume an electronic commerce WEB based application, where a client is browsing through a merchant catalog and eventually purchases some goods, all through a client browser. The WEB server WS, while geographically residing at the merchant's offices, is actually connected to the Internet (NET1) (possibly through a firewall - not shown in the figure), and is accessible to the entire Internet population via the HTTP (Hyper Text Transfer Protocol) protocol over TCP/IP (the Internet backbone protocol). The merchant's catalog is stored on the WEB server, so the client can browse through the catalog and make his selection using the regular WEB based technologies: the client is shown several high level topics, and chooses one. The client's selection is encoded to an HTTP request by the browser (application level), and is transformed to TCP packet(s) using the TCP/IP stack at the client's computer. The packet moves its way down the protocol stack to the physical layer, and from there to some adjacent computer (possibly the client's Internet Service Provider (ISP)). At that node, the packet goes up only to the routing layer (network layer) which brings it back down to the physical layer, only this time out through another interface to some other adjacent node. The packet continue to advance this way until reaching the WEB server node where the routing layer detects the packet has reached its destination and passes the packet to higher levels. Eventually, the data from the HTTP request is stripped from the underlying protocols, and the WEB server application receives the user's selection (at the application layer). The WEB server then fetches the appropriate catalog page, and builds an HTTP response containing the formatted item. It then sends the response to the client in the same manner described above, over the same TCP/IP link generated by the client's request. The client's browser strips the HTTP envelope (application layer) and displays the information on the client's screen.

The above mechanism continues back and forth, until the client has made his decision to purchase a specific item. The decision about purchasing the specific item is transferred to the server in an HTTP request formatted as always, along with the client's identification details. However, the database containing the client accounts resides in the company's internal network (NET2) and is not accessible to the outside network via any of the TCP/IP based protocols, not even to the WEB server. This is done to protect this important database, and other internal resources, from being abused by a hacker hacking into the internal network by exploiting a weakness in one of the allowed protocols. Of course the WEB server itself must be able to participate in TCP/IP sessions with unknown clients on the Internet. This is what makes the WEB server node a probable target for take-over attempts by hackers. Hence, even the WEB server should not be trusted in the internal network, and should not have inbound TCP/IP capabilities.

Once receiving the purchase order, the WEB server activates some application specific code that passes the data from the purchase order (at the application layer) to the front end's (FE1) driver. The front-end driver passes this information over the primitive network using the protocol(s) of the primitive network, if any. This data is picked up by the front end (FE2) of the internal network (first by its physical layer) and eventually passed via the driver to a specific application which verifies the data corresponds to a valid client and item information. Once the data has been verified, the specific application contacts the internal database to charge the client's account, using standard protocols (e.g. SQLnet over TCP/IP). Packets flow in the internal network in the same manner described from the client to the WEB server. Eventually, the specific application returns an acknowledgment that flows in the opposite direction all the way until received and displayed by the client's browser.

In an alternative implementation, a WEB server is placed in the internal network. The HTTP request information is passed through the primitive network, to a dedicated application that verifies its validity. Only specific requests from a predefined list are approved for internal processing. After a successful validation, the request information is passed to the internal WEB server which process the request as it normally does (and calls user written code that access the database if necessary). The output of the internal WEB server is then passed to the internal network front end and from there it is carried to the external network front end via the primitive network. The external WEB server returns the output to the client's browser, which was unaware of the entire process.

The current invention involves limiting the risks taken when connecting the internal network outside to an external network, to specific, well-known application level risks. In order to make sure that no other communications are passed through between the networks except the approved ones (which would increase the risk), the primitive network (or the internal network FE) can encrypt all inbound communications so that only authorized internal servers that posses the appropriate corresponding decryption key may use the incoming data. In addition, the primitive network (or the internal FE) may check all outgoing communications for a valid digital signature that authenticate their approved origin and block all other transmissions. In this manner, only approved internal processes can communicate through the primitive network PN and be the destination of transmissions passed through the primitive network.

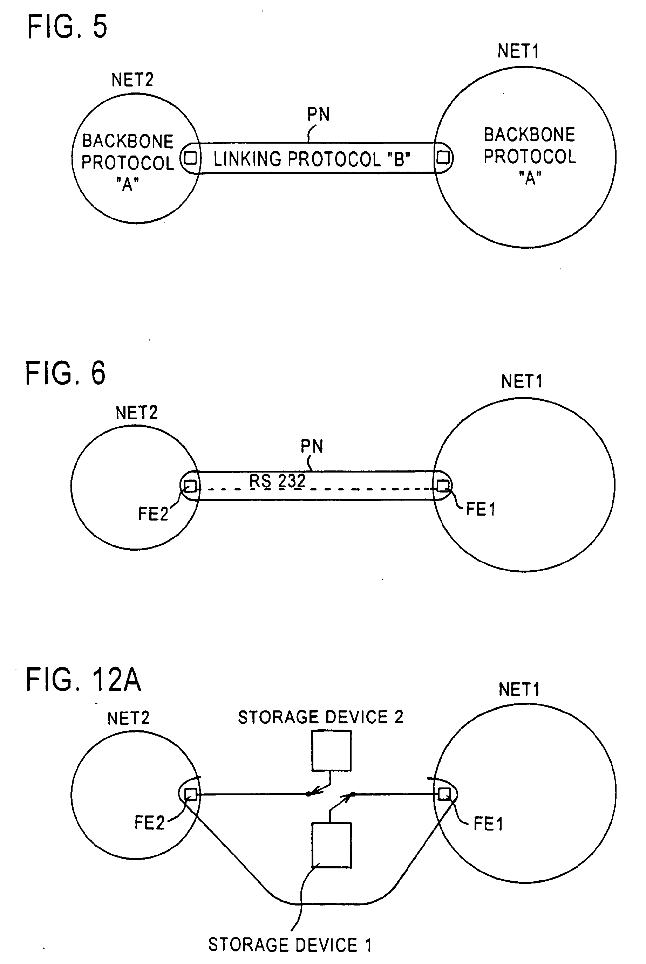

FIG. 5 shows network NET1 connected to network NET2 over a primitive network. The primitive network shown in FIG. 5 is essentially a generic representation of several types of primitive networks which might be utilized to connect the two networks to provide security isolation as desired in accordance with the invention. In its simplest form, the primitive network PN between NET1 and NET2 can be a simple wire connection over which the data flows once it has been removed from the TCP/IP envelopes which encapsulated it during its traversal of NET1 or NET2. Weaknesses in the TCP/IP protocol code that might ordinarily be exploitable by a hacker are not available once data (removed from its encapsulation) reaches the primitive network.

FIG. 6 illustrates another example of a primitive network connecting NET1 and NET2. In this embodiment, the primitive network is comprised of an RS232 link between the front ends of NET1 and NET2. The RS232 link has the ability, like a direct connection, to pass data that has been extracted from the TCP/IP encapsulation. The simplicity of the RS232 specification does not permit weaknesses in the TCP/IP protocol in NET1 that might be exploited by a hacker to propagate across the RS232 link into NET2.

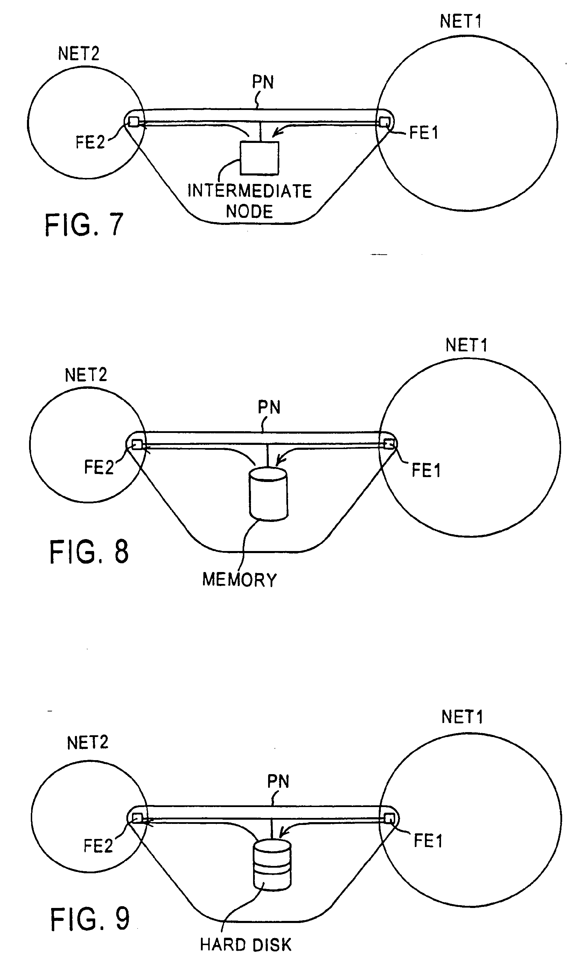

FIG. 7 is an exemplary embodiment in which the primitive network includes an intermediate node. This intermediate node can take several forms.

In the embodiment shown in FIG. 8, the intermediate node is a memory medium. In this embodiment, data coming from NET1 is written to the memory medium and then subsequently read by the front end connected to NET2. This approach permits not only the isolation provided by the primitive network PN, but isolation in time as well.

If, as illustrated in FIG. 9, the memory medium at the intermediate node of the primitive network takes the form of a magnetic storage medium, such as a hard drive, the performance of the disk can be improved if writing to and reading from the disk occurs to/from a single sector. In this arrangement, the latency associated with seeking a track and moving a read or write head over the track to which the data has been written is obviated. Rather, the read/write head(s) remains in one position and the reading and writing operations occur to a single track or sector consecutively.

To achieve even better performance, the read/write blocks can be adjusted to correspond to cache size so no reading and writing to the magnetic media need occur. This will increase the lifetime of the storage device, since it will decrease the movements of parts in the device. As an alternative, an electronic memory storage device can be used with no moving parts.

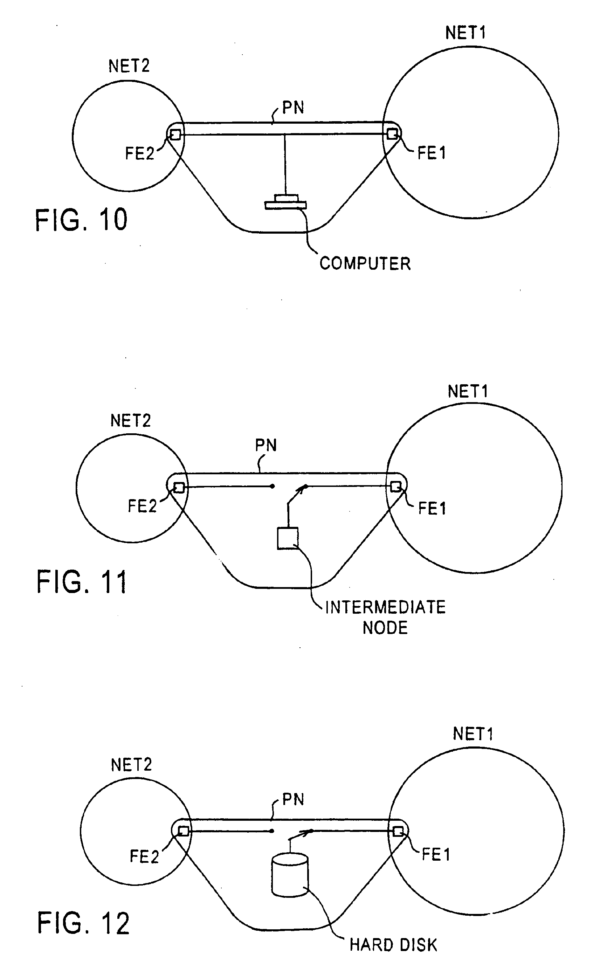

As shown in FIG. 10, the intermediate node of a primitive network can be a computer itself. In this case, the front end of NET1 loads the information from the front end into the intermediate node computer where it may be stored until it is sent to the front end of NET2 or retrieved by the front end of NET2 upon request.

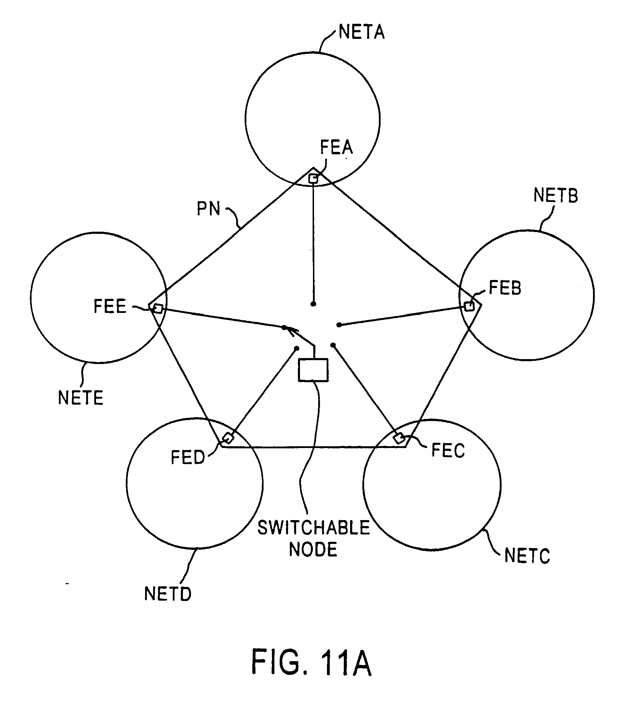

In FIG. 11, the intermediate node on the primitive network is shown generically as a switchable device which can be connected selectively to the front end of NET1 and to the front end of NET2. This keeps the two networks electronically disconnected at all times and ensures that the internal network FE is communicating with a trusted destination (the intermediate node) at all times without the interference of the external FE, an untrusted node.

FIG. 11A illustrates a plurality of networks (NETA, NETB, NETC, NETD, NETE) connected using a primitive network PN which has a switchable intermediate node (e.g., a storage device). In this illustration, front end FEE of NETE is connected to the switchable intermediate node while being disconnected from all the remaining front ends (FEA, FEB, FEC, FED). Subsequently, the front end FEE of the NETE will disconnect from the switchable intermediate node and another of the front ends will connect to the switchable intermediate node while being disconnected from the other front ends. Thus, one a single front end (of network NETA, NETB, NETC, NETD, NETE) at a time is connected to the switchable intermediate node.

In FIG. 12, the switchable device is a disk drive. When connected to the front end of NET1, information can be transferred from the front end to the disk and from the disk to the front end. When connected to the front end of NET2, information stored on the disk can be read by the front end of NET2 and information from NET2 can be written to the disk. All transfers to and from disks can be done, preferably, using direct memory access (DMA).

FIG. 12A shows the switchable device as two-switched storage devices. When connected as shown in the FIG. 12, FE1 reads and writes information to storage device 1 while FE2 reads and writes information to storage device 2. Then the connection is toggled so that FE1 is connected to storage device 2 and FE2 is connected to storage device 1 so that each can read the other's (written) data and then write new data.

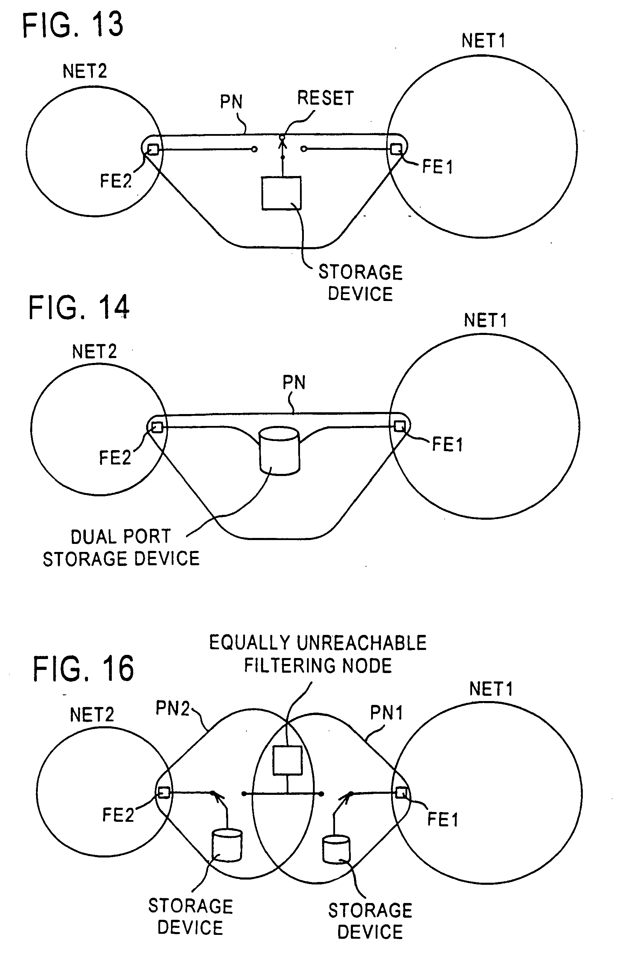

FIG. 13 shows an extension of the concept shown in FIG. 12 with additional security features. The storage device shown in FIG. 13 operates under control of a controller; e.g., a hard disk with a hard disk controller. The hard disk controller has the ability to be selectively reset. When the disk controller is reset, it resets to a default state that has been predetermined either by the controller manufacturer or by an original equipment manufacturer (OEM) that incorporates the disk into the system. The reset position shown in FIG. 13 symbolically represents the fact that between the two states utilized to connect the disk to the front end of NET1 and to the front end of NET2, respectively, there is a resetting of the hard disk controller. This resetting does not affect any of the information stored in memory. When the front end of NET1 writes information to the hard disk and receives information from the hard disk, the hard disk is connected to the front end of NET1 and disconnected from the front end of NET2. The hard disk connection is then switched to the front end of NET2 so the information can be transferred between the front end of NET2 and the hard disk. To avoid any possibility of a hacker on NET1 or NET2 from reaching out and taking control of the controller of the hard drive, the controller is reset with each change of state of the switch. In this way, even if a hacker should achieve control of the controller of the hard drive, any settings that were deliberately corrupted by the hacker would be erased when the controller was reset. Thus, one can guarantee that the controller is always in the correct state, regardless of attempts from the outside to maliciously interfere with its operation and that the security would thus be maintained. This approach can be applied to any node used as the intermediate node and not just to a hard disk. One can reset all of the hardware as long as the contents of memory are not reset. This resetting ensures that the intermediate node conforms to the PN protocol.

In FIGS. 11-13, there is no instant of time during which there is a physical or electronic connection between NET1 and NET2. One way of demonstrating how this is accomplished is discussed hereinafter. However, it can be accomplished simply by ensuring that the connection to one side of the switch is broken before the connection to next side of the switch is made.

In FIG. 14, however, although the line illustrates a connection to a dual storage device (e.g., a hard disk) from both front ends, the signal path between the front end of NET1 and the front end of NET2 is such that the signal path is never electrically continuous between the front end of NET1 and the front end of NET2. Rather, in this illustration, the data from the signal path from the front end of NET1 is written onto the hard disk of the primitive network and then, at a point displaced in time, read from the magnetic medium by the front end of network NET2. This displacement in time and the physical separation of the read/write heads from the magnetic medium (of the hard disk) ensures that no electrical connection is achieved, in the signal path between the front end of NET1 and the front end of NET2.

When data arrives at the internal front end, the internal front end can inspect the information passed to it and decide whether to pass the information, as it is, modify it, or block it completely. If no clear decision can be made automatically, the information can be routed to a security officer console for a manual decision. Some of the checks that can be made at the internal front-end machine (or on other delegate nodes) include virus detection & digital signature authentication (both on inbound communications), and key word search (on outbound communications). Examples of modifications that can occur to data include the following: encryption and digital signing of outgoing transmissions, decryption of incoming transmissions, application level processing and format conversion.

Although technologies to filter the content exist, an important advantage of the described invention in one embodiment is the fact that all filtering is performed in the internal (secured) front end, and hence, cannot be overridden, even if the external front end is taken over by a hacker. In addition, all cryptographic keys are safely stored on the inside (secured) network and are not exposed to the outside. These keys cannot be retrieved even if a hacker took control over the external front end.

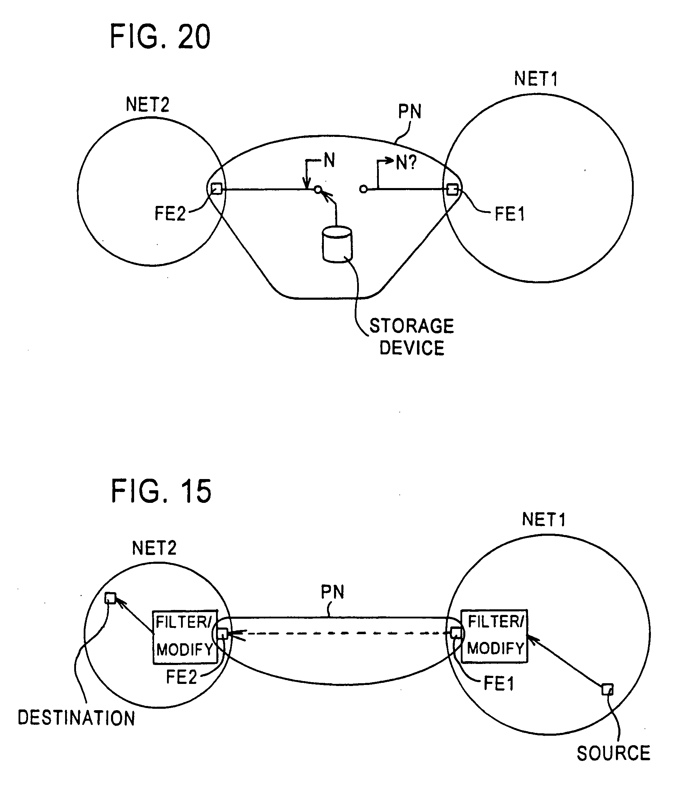

FIG. 15 illustrates the concept that data filtering and modification can occur at both front ends FE1 and FE2. For example, the incoming data can be tested for viruses and/or can be decrypted at FE2. However, since NET1 is sometimes the internal network and NET2 is the external network, data to be transferred outbound (from NET1 to NET2) may be filtered or modified at the internal FE; e.g., encryption, key word detection, etc. Hence, both FE1 and FE2 may filter and modify the communication. Delegate nodes on behalf of the FE nodes may carry out the filtering (and modification) process. However, the delegate nodes reside on the same network as the FE (i.e., NET1 for FE1 and NET2 for FE2).

FIG. 16 shows a network architecture in which two primitive networks (PN1, PN2) are utilized to achieve additional security between NET1 and NET2. In many of the examples described previously, NET2 is assumed to be secure whereas NET1, typically the Internet, is definitely not secure. However, it is not uncommonly the case that NET2 can be unsecure as well. In such a circumstance, it may be desirable to protect the internal network from users on both networks. One way of doing that is shown in the architecture of FIG. 16. The front end of NET1 connects to an intermediate node over PN 1. The intermediate node then can perform all security processing on the information flows, including inspection and modifications. The information flow from the intermediate node can then pass to NET2 over PN2. In this fashion, the intermediate node that filters the data is protected from both networks and not even a hacker residing in the internal network (NET2) can override the security filtering performed on that node.

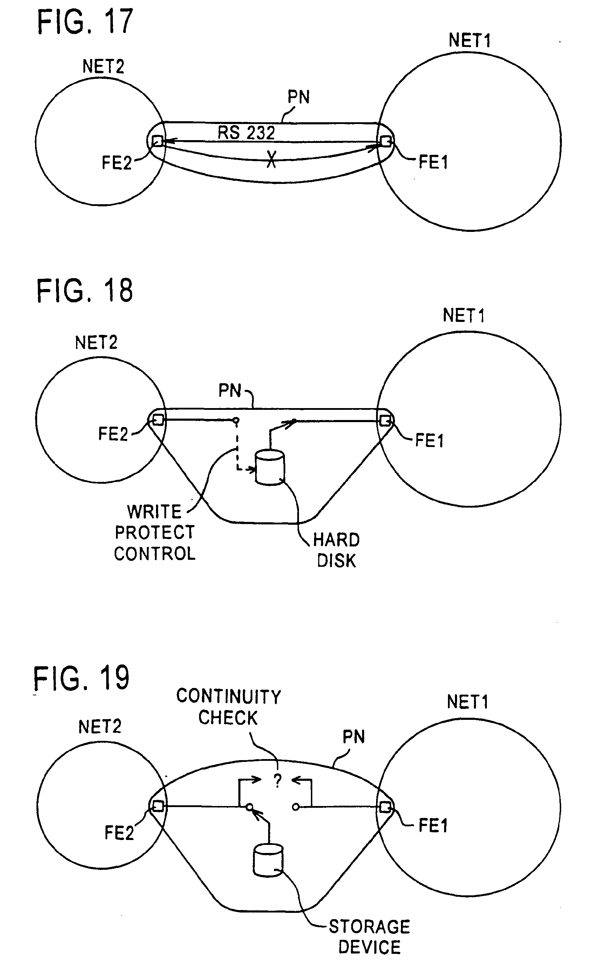

It is sometimes the case that one desires to ensure the data flows only in one direction. Such a situation might occur when data is to be broadcast in only one direction from one network and that no interaction with the other network to which the information is being broadcast should occur. FIG. 17 shows one way of achieving this. In FIG. 17, the RS232 link is partitioned so that data flows only in one direction. Specifically, the link in the opposite direction is disabled either by not equipping the RS232 connector with wiring or by throwing a switch.

A different implementation is shown in FIG. 18 with the storage device being, for example, a hard disk. In FIG. 18, one directional flow of information is achieved by imposing a write protect mode on the hard disk when the switch changes from connecting from one front end to connecting to the other front end. As shown in FIG. 17, when the hard disk (storage device) is connected to the front end of NET2, a write protect line is activated so that the information from the front end of NET2 cannot be written to the hard disk. Information can only be written to the hard disk from the front end of NET1 and thus information can flow only in the direction from NET1 to NET2 (in the example where NET2 is the internal network this configuration assures no leakage of information whatsoever from the (highly confidential) internal network). For increased security, the default mode of the storage device is the read only mode and changes to a read/write mode only in response to a control signal.

FIG. 19 illustrates the concept of assuring that no electrical connection (electrical isolation) is achieved in the signal path between the front end of NET1 and the front end of NET2 by checking for continuity (i.e. a short circuit) across the input and output of the switched device.

FIG. 20 illustrates a sample implementation of checking for continuity across the switched path. In particular, a periodic wave (e.g. a sine wave) is injected on all signal wires on one side of the bus connection and the other side of the bus connection determines whether or not the injected periodic wave is present on any of its signal wires. Presence of the wave indicates continuity across the switched path.

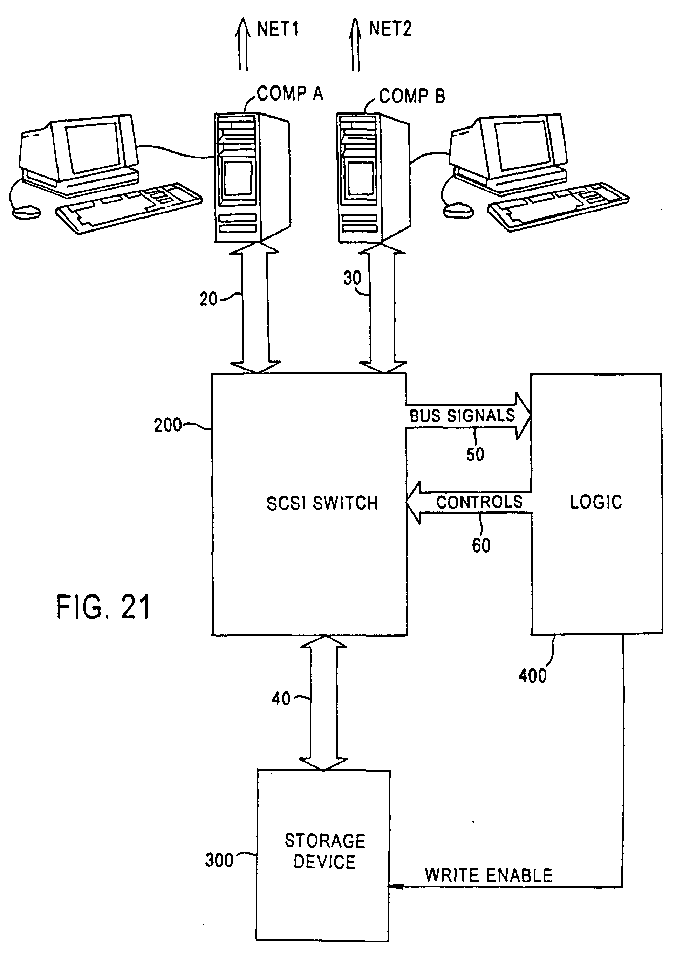

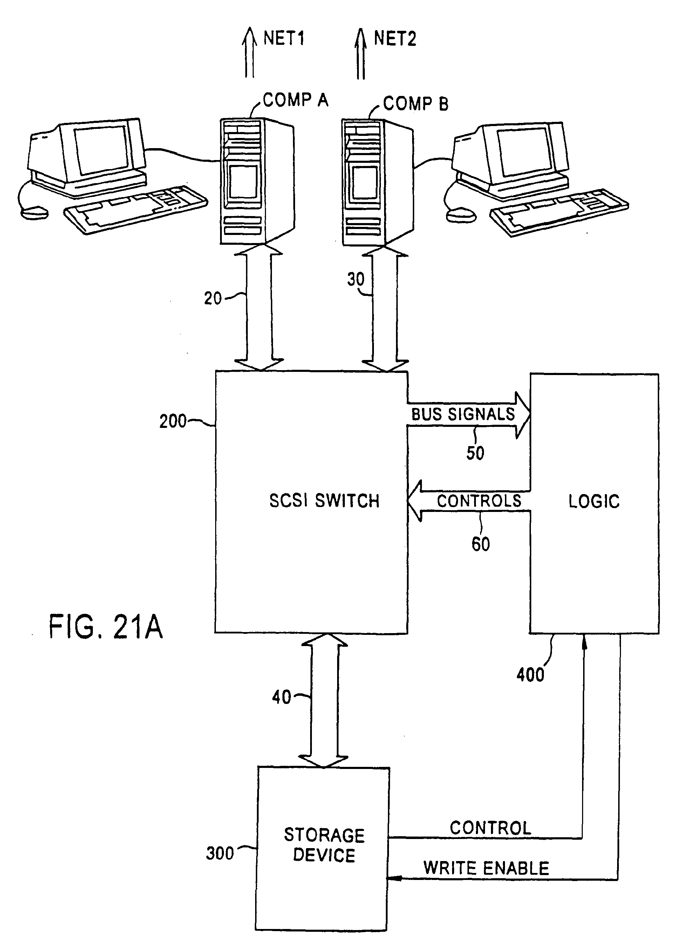

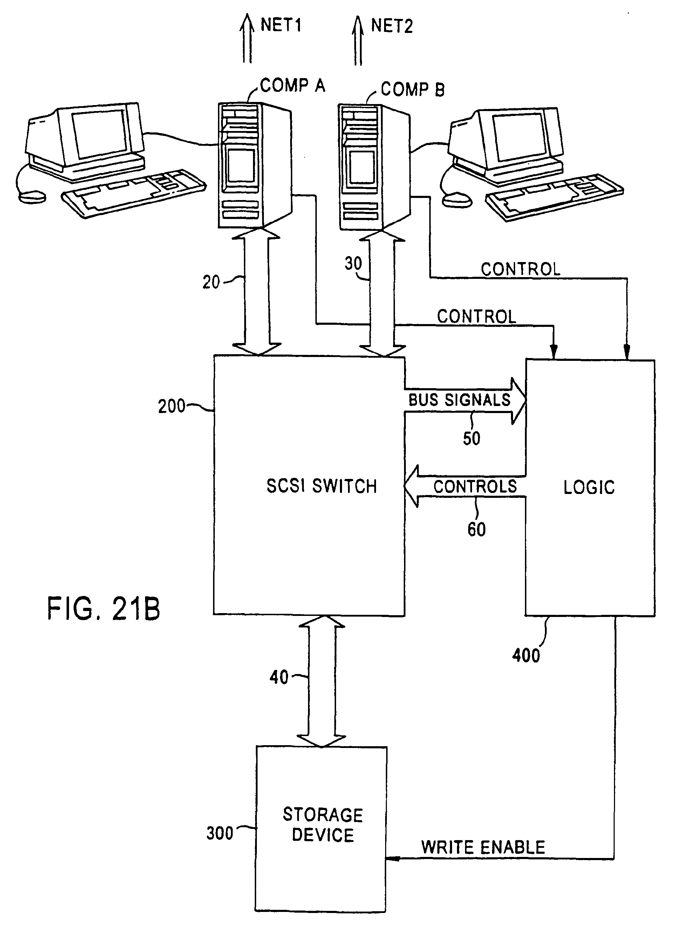

FIG. 21 is a block diagram illustrating an implementation of the present invention, and includes two computers (COMP A and COMP B) acting as front ends for two networks, and a switchable storage device. Computer A is connected to a SCSI switch 200 via SCSI bus 20 and computer B is connected to switch 200 via SCSI bus 30. The bus signals from both SCSI buses 20 and 30 are provided as bus signals 50 to logic 400, which provides controls 60 to switch 200. Switch 200 is connected also to storage device 300 which can be, for example, a magnetic disk or an electronic memory device, via another SCSI bus 40. In the present description, switch 200 is implemented as an analog switching device (described later) connecting storage device 300 to either SCSI bus 30 or SCSI bus 20. However, other implementations of switch 200 are possible. Signals to control the toggling of switch 200 originate in the driver that resides in the computer which is currently connected to the storage device 300 and can be in one preferred embodiment, an indication by each computer that it is finished accessing the disk. This indication is provided to logic 400 which issues controls 60 directing the switch 200 to toggle connection to the storage device from one SCSI bus to the other SCSI bus. The signal sent by a front end can be, in another embodiment, a command to write to a non-existent device.

Logic 400 provides also a write enable signal to storage device 300 enabling the option of placing storage device 300 in either read/write mode or read-only mode. A user of the invention can select these modes. For example, the mode of storage device 300 can be selected to be the read-only mode when connected to Computer A and to be the read/write mode whenever switch 200 connects Computer B thereto. Consequently, no data can flow from the network represented by Computer A to the network represented by Computer B through the primitive network. As noted earlier, for security purposes, the default mode of storage device 300 is the read-only mode. This ensures the logic 400 has indeed allowed for the relevant FE to pass data.

If storage device 300 is, for example, set to read-only mode (unidirectional mode) when connected to computer A, no acknowledgement can be written to the storage device indicating that data has been successfully read and processed.

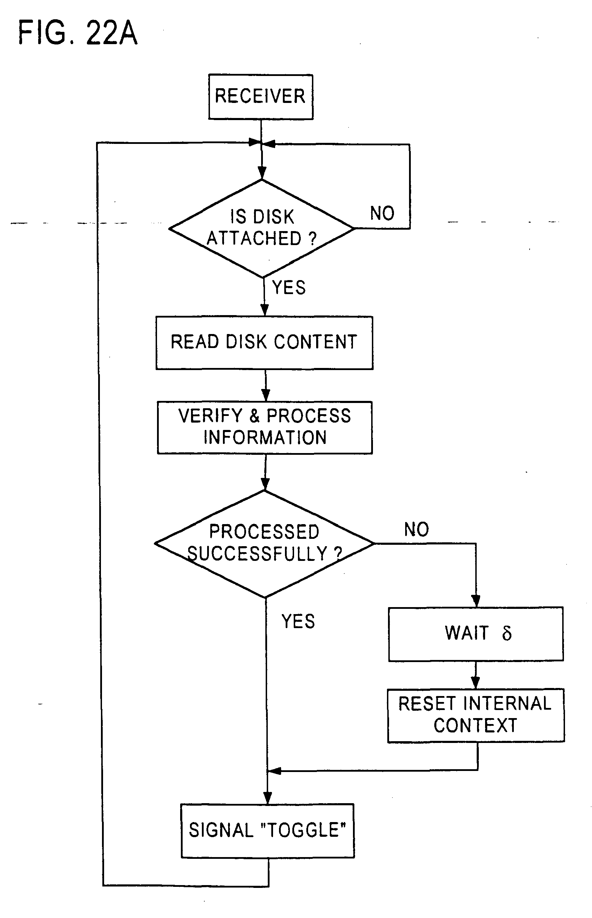

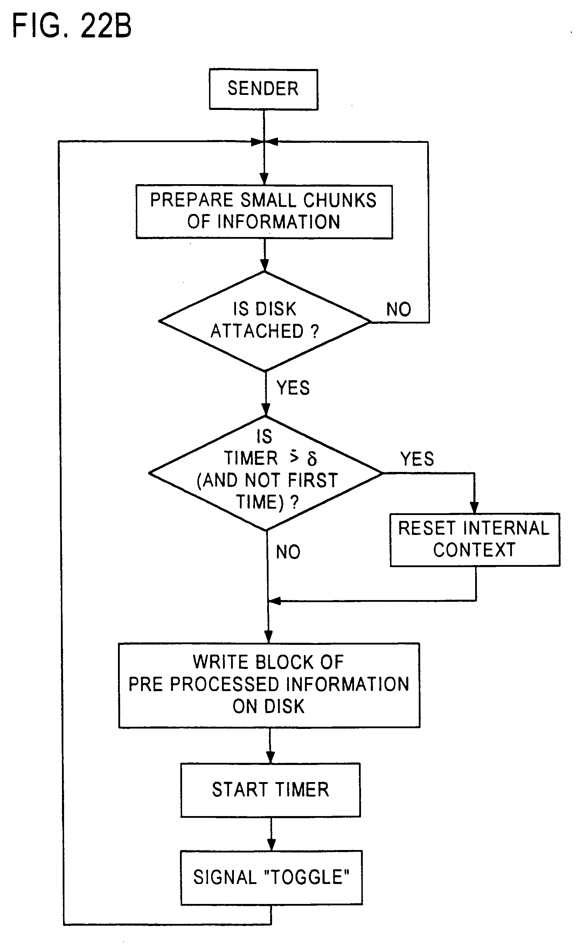

FIGS. 22A and 22B are flow diagrams illustrating operation of a receiver driver and a sender driver in the read-only mode (unidirectional mode) for addressing this problem. Referring to FIG. 22A, a receiver (of the data) first determines whether the storage device 300 is attached and if not, waits until it is. When the storage device 300 is attached, the contents of the storage device are read and verified. Next, the content is processed (possibly by forwarding it to its ultimate destination for processing). If processing is successfully finished, a "toggle" signal is sent indicating that switch 200 should change connection. If the data has not been successfully processed, then a delay of δ seconds or fractions of a second is initiated (the storage device is held in one position), the internal context is reset and then the "toggle" signal is sent (after the delay). The delay is interpreted as a negative acknowledgement by the sender.

Referring to FIG. 22B, a sender prepares a small chunk of information to be sent to the storage device and then queries whether or not the storage device 300 is attached. When the answer is NO, preparation of information continues until the storage device 300 is attached. When the storage device is attached (YES) a query is made as to whether time from a timer is ≥ δ (the delay in FIG. 22A) and not the first time (the timer has been activated). If the response is NO, a block of preprocessed information is written to the storage device, the timer is started and the "toggle" signal is issued. However, if the response is YES, then the internal context is reset (meaning the next block that will be sent will represent the beginning of the transmission), a block of data is written to the storage device, the timer is restarted and the "toggle" signal initiated. Thus, if the receiver holds the storage device 300 for the delay (δ seconds), the sender will determine that the timer time is greater that δ which indicates that the information should be resent. Delay δ should be chosen such to be much longer than a normal cycle time to avoid needless resets.

FIG. 21A shows a variation of FIG. 21 where a signal to release the storage device 300 is sent by special command from FE1 and FE2 to the storage device 300 via the switch connections of switch 200 and SCSI bus 40. The storage device 300 then issues a control signal to logic 400 which issues controls 60 directing the switch 200 to toggle connection from one SCSI bus to the other SCSI bus.

FIG. 21B shows still another variation of FIG. 21 where a signal to release the storage device 300 is sent from the front end directly to logic 400. Logic 400 then issues controls 60 directing the switch 200 to toggle connection from one SCSI bus to the other SCSI bus.

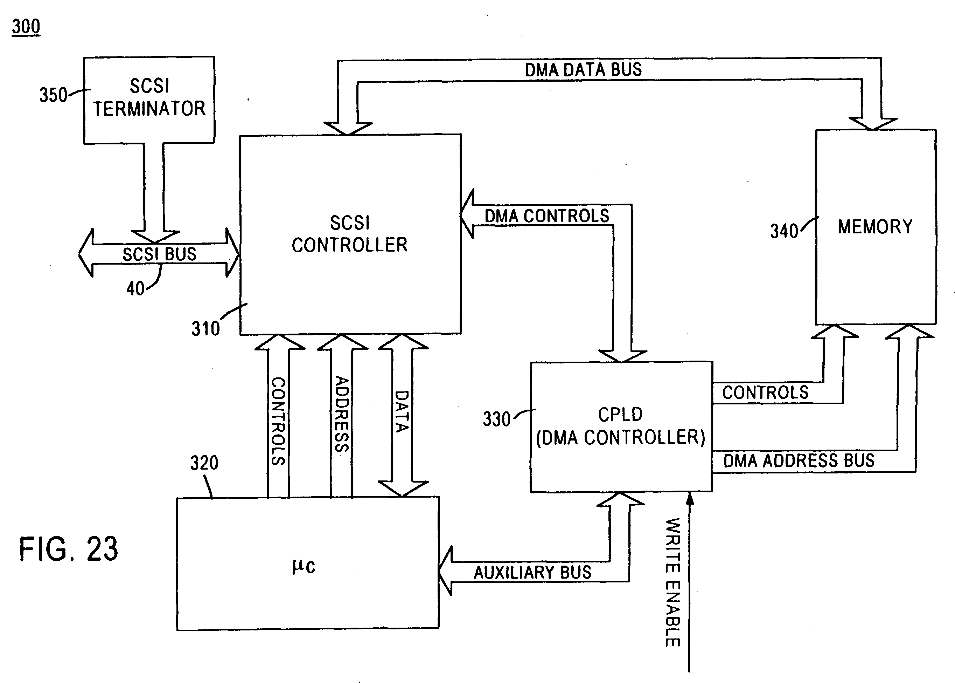

FIG. 23 is a block diagram illustrating storage device 300 of FIG. 21. Data is received from SCSI bus 40 by controller 310. A SCSI terminator 350 ensures proper termination of the SCSI bus. Controller 310 is also connected to microprocessor 320, which provides control, address and data signals to the controller 310. An auxiliary bus connects the microprocessor to CPLD 330 (Complex Programmable Logic Device) which provides control signals and DMA (Direct Memory Access) addresses to memory 340. DMA control signals are also bidirectionally provided between controller 310 and CPLD 330. Data to be stored in the memory 340 are provided over the DMA Data Bus. The write enable signal from logic 400, which is used to place the memory 340 into the read/write mode or read-only mode, is provided to CPLD 330 and forms part of the control signals to memory 340. As noted earlier, the default mode of memory 340 is the read-only mode.

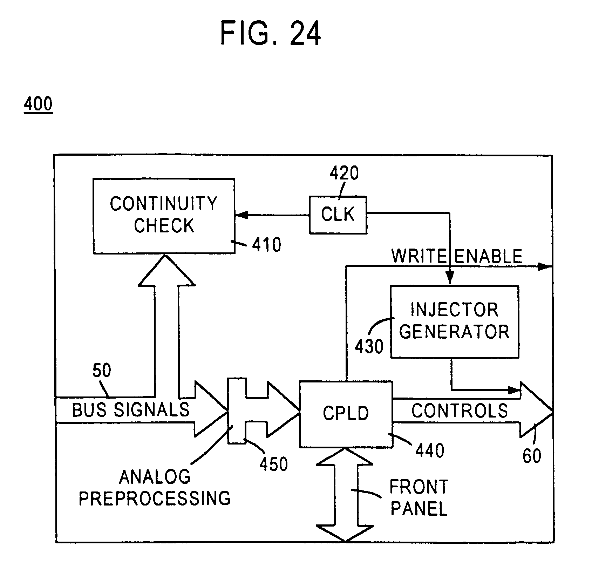

FIG. 24 is a block diagram illustrating logic 400 of FIG. 21. Included in the logic 400 are Complex Programmable Logic Device (CPLD) 440, which is used to drive components on a front panel (not shown); e.g. LEDs, as well as to provide control signals 60 and the write enable signal. CPLD is used also to detect the attempted connection to the non-existence device mentioned earlier. Included also are an analog preprocessing circuit 450 to provide the necessary digital signals from the raw bus signals received on the bus 50, continuity check circuit 410, injector generator 430 and clock 420 to synchronize continuity check circuit 410 and injector generator 430. A signal from injector generator 430 is provided with control signals 60. Continuity check circuit 410 and injector generator 430 (described in more detail later) are used to check for continuity of the connection as mentioned earlier.

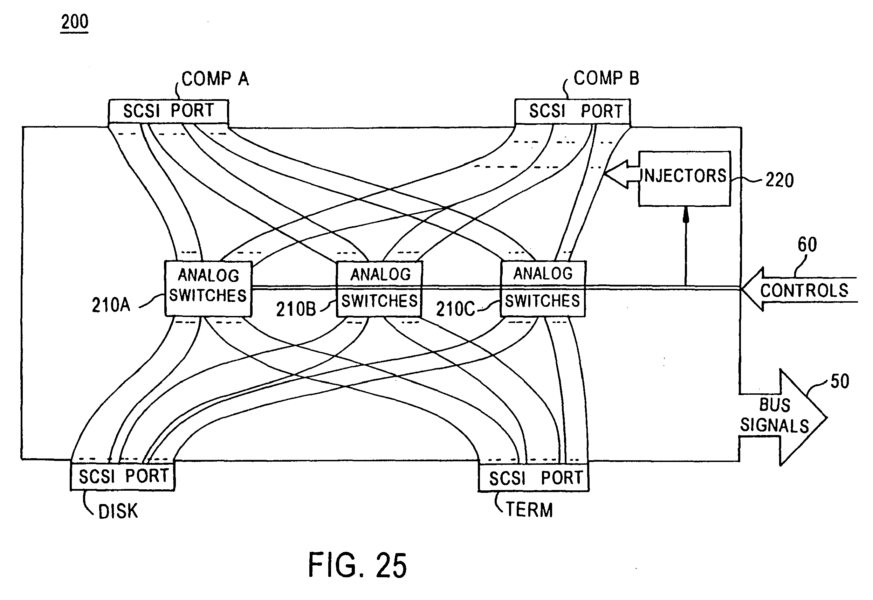

FIG. 25 is an illustration of switch 200 of FIG. 21. The switch 200 has two SCSI ports on one side (one labeled COMP A and the other labeled COMP B) and two SCSI ports on the other side (one labeled TERM and the other labeled DISK). The switch 200 can connect either COMP A to DISK and COMP B to TERM, or connect COMP A to TERM and COMP B to DISK. In either case, this is transparent to both SCSI buses. In one implementation of the invention, DISK is connected to a terminated SCSI storage device, and TERM is connected to a SCSI terminator. For further performance, TERM can be connected to a second terminated SCSI storage device. In this manner, each FE has a storage device attached to itself at all time, while still disconnecting the front ends. Three identical chips 210A, 210B and 210C, each having 12 sets of analog switches, perform the actual switching in FIG. 25. While three chips are shown, it is possible to use a single analog chip or more than three chips. It is possible still to use some other type of switch that performs the necessary switching function (e.g. relay).

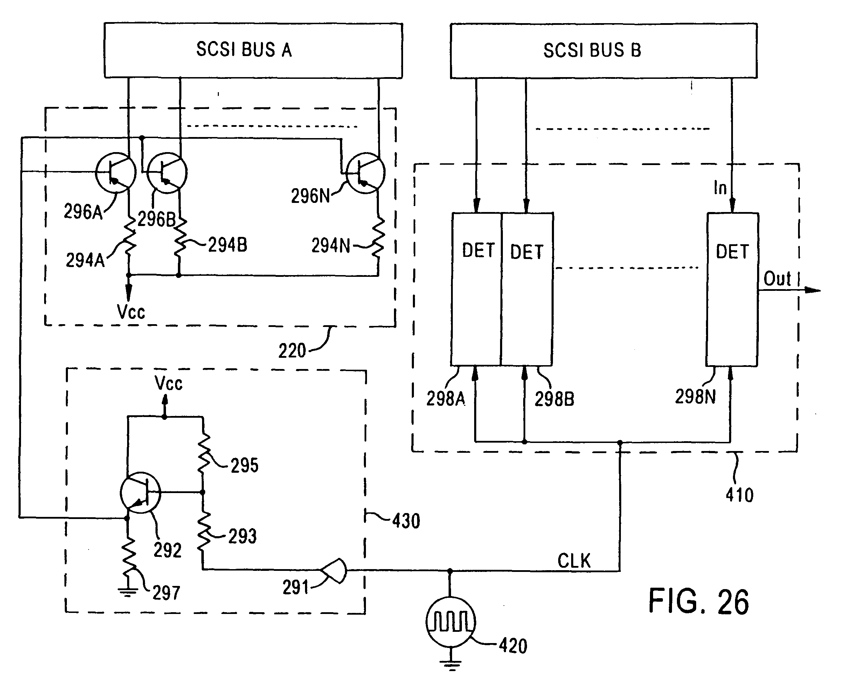

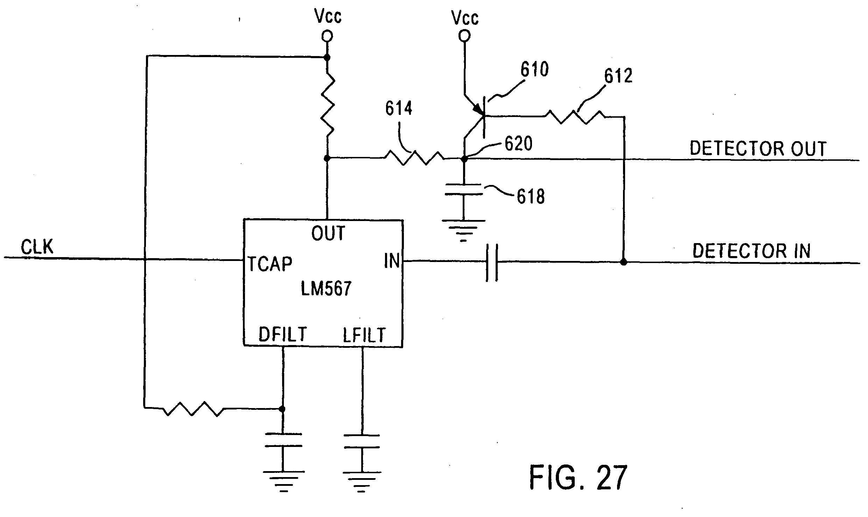

The signal provided from injector generator 430 is input to injectors 220, discussed more hereinafter, for injecting a signal to the lines from computer B. When this is the case, detectors (shown in FIG. 26 and 27) are provided for the lines of computer A. While FIG. 25 shows injecting signals on the lines from computer B, this could be reversed and a signal could be injected to the lines from computer A with the detectors connected to the lines from computer B.

FIG. 26 is a diagram showing an exemplary connection of the generator 430, clock 420, and injectors 220 and continuity check circuit 410, which are used in the continuity checking. The CLK signal from clock 420 is provided to both the injector generator circuit 430 and to the continuity check circuit 410. The CLK signal is input to jitter circuit 291 which keeps the injection generator synchronized and the output of jitter circuit 291 is provided to the base of NPN transistor 292 through a voltage divider since the based is connected to a node between serially connected resistors 293 and 295. This, in conjunction with the injectors, compensate for behavior changes of the transistors when the temperature varies. VCC is provided to another end of resistor 295 as well as to the collector of transistor 292. The emitter of transistor 292 is connected to an output node, which is also connected to ground through resistor 297. Consequently, the signal connected to the output node of transistor 292 will be an oscillating voltage, which is provided to the based of each injector of injectors 220. Each injector SCSI bus A is formed of a transistor 296 (for example, 296A to 296N) connected to VCC through a resistor 294 (for example, 294A to 294N). As connected, each of the injectors is a current source so that the signal at the base of each transistor 296 determines the amount of current that will be injected to a specific wire (of the bus). As a result, the same signal provided to the base of each transistor 294 is injected to each wire (of the bus). Connected to SCSI bus B is continuity check circuit 410 having a detector 298 for each signal wire of the bus (for example, 298A to 298N).

FIG. 27 is a circuit diagram of an exemplary detector 298. Each detector receives the reference signal CLK and the detector IN signal from the bus line and looks for a frequency on the IN signal that is the same as that of the reference CLK. The reference CLK is provided to a frequency detector (or a Tone Detector, or a Phase Lock Loop (PLL)) which in one embodiment is an LM567 manufactured by National Semiconductor, which receives also the IN signal. The capacitors and resistors shown in FIG. 27 are those used in a typical configuration of the LM567. When the LM567 finds the reference frequency CLK in the detector IN signal, the OUT signal goes low; otherwise the OUT signal is high. Therefore, if there is a short circuit (circuit continuity across the switch), the output of the detector is low and when there is no short circuit (no circuit continuity) the output of the detector is floating (open collector).

Since the SCSI bus operates at a higher frequency than the frequency used for the continuity detection, it may contain also the detection frequency. Hence, there is a need to prevent false alarms. One way of doing so is cheeking for the injected signals only when the bus wire is an idle. In SCSI, this means the voltage is high (logical FALSE).

Transistor 610, resistors 612 and 614, and capacitor 618 are provided to disable detection whenever the IN signal is at the logical true (0V) level and shortly thereafter. The IN signal is provided to the base of PNP transistor 610 through resistor 612. The collector of transistor is 610 is connected to node 620 which is connected also to the detector OUT, to resistor 614 (connected to the output of the LM56) and to one end of capacitor 618. The other end of capacitor 618 is connected to ground. With this connection, wherever the IN signal is low, PNP transistor 610 is ON and capacitor 618 is charged which results in the detector signal OUT being high; i.e., no short is detected. When the IN signal is high, transistor 610 is OFF, and if the LM567 finds that the IN frequency matches the reference CLK frequency, the OUTPUT signal will be low. Consequently, capacitor 618 will discharge and the OUT signal of the detector will go low, indicating a short circuit (circuit continuity).

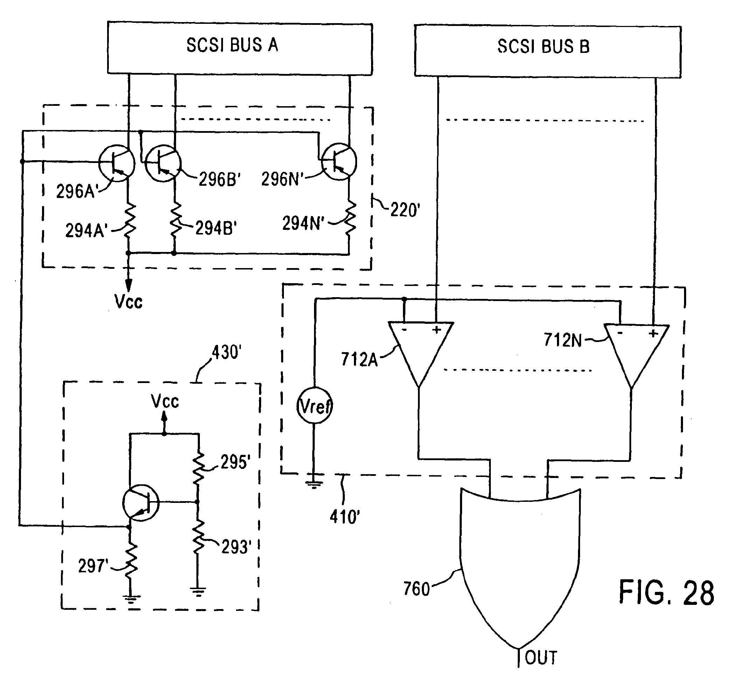

FIG. 28 is a circuit diagram of another exemplary connection of the connection illustrated in FIG. 26 with generator 430', injector 220' and continuity check circuit 410' used in continuity checking. Each injector 296' is similar to the injector 296 shown in FIG. 26, but has a constant voltage applied to the based of the PNP transistor 710 provided by constant voltage generator 430' instead of the generator 430. Therefore, a constant current is applied to each wire of the bus. Each detector is a voltage compactor 712 (712A to 712N), and if there is circuit continuity, the input to the compurgator 712 will be more than Vref and the output will be "1" indicating that there is a short circuit. Vref is selected so that under a normal SCSI bus, the output of the comparator will be "0" indicating no short circuit. As shown in FIG. 28, the output of the detectors 712A to 712N are input to a NOT gate 760.

In the foregoing description, the invention has been described with reference to specific embodiments thereof. It will, however, be evident that various modifications and changes may be made thereto without departing from the invention. For example, although the invention has been explained by showing linkages between two networks that the techniques described could be applied to network interconnections of three or more networks in a routine fashion. The specification and drawings are, accordingly, to be regarded in an illustrative way, rather than in a restrictive sense. For example, it should be clear, that although the invention has been explained by showing linkages between only two networks, that the techniques described could be applied to network interconnections of three or more networks in a routine fashion.

## Claims

1. A method for transmitting data and ensuring security isolation between an external network (NET1), wherein data comply with a first telecommunication protocol stack comprising a first plurality of layers, and an internal network (NET2), wherein data comply with a third telecommunication protocol stack comprising a third plurality of layers, the method comprising:
- providing a first (FE1) and second (FE2) front-end node between the external network (NET1), and the internal network (NET2), associated to the external network (NET1) and to the internal network (NET2), respectively;
- providing a primitive network (PN) between said first (FE1) and second (FE2) front-end nodes, dedicated solely to connect the internal network (NET2) to the external network (NET1), wherein:
said primitive network (PN) provides the mechanism to transfer data between said first (FE1) and second (FE2) front-end nodes, so that all the data communication between the external network (NET1) and the internal network (NET2) passes through said primitive network;
said primitive network supports a second telecommunication protocol stack different from said first and third protocol stacks;
- receiving at the first front end node (FE1) data from the external network (NET1) destined to the internal network (NET2), said data being compliant with said first telecommunication protocol stack;
- at the first front end node (FE1), breaking all layers of said first telecommunication protocol stack, in order to access the information in said layers;
- inspecting said accessed information for filtering data and deciding which data are to be forwarded to the internal network (NET2);
- encapsulating filtered data according to said second telecommunication protocol stack;
- transmitting the encapsulated data from the first front end node (FE1) to the second front end node (FE2) over the primitive network (PN);
- receiving said encapsulated data at the second front end node (FH2);
- when an ultimate destination of the transmitted data is not the second front end node (FE2), at said second front end node (FE2), breaking all layers of said second telecommunication protocol stack, in order to access the information in said layers;
- further inspecting said accessed information for further filtering said received data to decide which data are to be forwarded to the internal network (NET2);
- encapsulating said further filtered data according to said third telecommunication protocol stack;
- transmitting said further filtered data from the second front end node (FE2) to the destination, over the internal network (NET2).

2. The method of Claim 1, wherein the first telecommunication protocol stack and the third telecommunication protocol stack are the same telecommunication protocol stack.

3. The method of Claim 2, wherein the first telecommunication protocol stack and the third telecommunication protocol stack comprise protocols selected from the group consisting of TCP/IP, DECnet, Novell and SNA.

4. The method of Claim 1, wherein the telecommunication protocol stack ofthe primitive network comprises protocols selected from the group consisting of SCSI, SCSI-2, SCSI-3, SPI, Fast-20, Fast-40, LVD, parallel data port, serial data port, USB, RS-232, ethernet, token ring, FDDI and ATM.

5. The method of Claim 1, wherein said transmitting of the data from the first front end node (FE1) of the external network (NET1) to the second front end node (FE2) of the internal network (NET2) comprises:
transferring data from the first front end node (FE1) of the external network (NET1) to at least one intermediate node; and
transferring the data from the at least one intermediate node to the second front end node (FE2) of the internal network (NET2).

6. The method of Claim 5, further comprising:
inspecting the data received by at least one front end node (FE1, FE2) and deciding whether to block the transfer of the data received.

7. The method of Claim 5, wherein after said receiving data and before said transmitting of the selected data over the internal network (NET2) to the destination, the respective second front end node (FE2) can modify the data.

8. The method of Claim 5, wherein prior to said transferring of data from the first front end node (FE1) of the external network (NET1) to at least one intermediate node, the at least one intermediate node is electrically isolated from the second front end node (FE2) of the internal network (NET2), and said transferring of the data from the at least one intermediate node to the second front end node (FE2) of the internal network (NET2) further comprises:
electronically isolating the at least one intermediate node from the first front end node (FE1) of the external network (NET1),
electronically connecting the at least one intermediate node to the second front end node (FE2) of the internal network (NFT2), and
transferring the data from the at least one intermediate node to the second front end node (FE2) of the internal network (NET2).

9. The method of Claim 8, wherein the at least one intermediate node is a storage device.

10. The method of Claim 9, wherein after said electronically isolating of the at least one intermediate node from the first front end node (FE1) of the external network (NET1), the storage device is reset, except for its memory element.

11. The method of Claim 9, wherein
the storage device has a read/write mode and a read-only mode, and
the storage device is normally in the read-only mode and is placed in the read/write mode only in response to a control signal.

12. The method of Claim 8, wherein prior to said transferring of the data from the at least one intermediate node to the second front end node (FE2) of the internal network (NET2), the at least one intermediate node is placed in a read-only mode.

13. The method of Claim 8, further comprising the step of:
inspecting the data received by at least one front end node (FE1, FF2) and deciding whether to block the transfer of the data received.

14. The method of Claim 8, wherein after said receiving data and before said transmitting of the selected data over the internal network (NET2) to the destination, the respective second front end node (FE2) can modify the data.

15. The method of Claim 5, wherein the first front end node (FE1) of the external network (NET1) is always electrically isolated from the second front end node (FE2) of the internal network (NET2).

16. The method of Claim 15, further comprising:
constantly verifying with a control unit that the first front end node (FE1) of the external network (NET1) is always electrically isolated from the second front end node (FE2) of the internal network (NET2).

17. The method of Claim 16, wherein verifying that the first front end node (FE1) of the external network (NET1) is always electrically isolated from the second front end node (FE2) of the internal network (NET2) includes injecting a periodic wave on signal lines coming from one front end node (FE1, FE2) and detecting whether the wave is present on signal lines coming from the other front end node (FE1, FE2).

18. The method of Claim 16, wherein verifying that the first front end node (FE1) of the external network (NET1) is always electrically isolated from the second front end node (FE2) of the internal network (NET2) includes generating a DC signal shift on signal lines coming from one front end node (FE1, FE2) and detecting whether there is a shift of the DC signal on signal lines of a different front end node (FE1, FE2).

19. The method of Claim 5, wherein there are a plurality of internal networks (NETA, NETB, NETC, NETD, NETE) each network having a network front end node (FEA, FEB, FEC, FED, FEE), prior to said transferring of data from the front end node of the external network (NETA, NETB, NETC, NETD, NETE) to at least one intermediate node, the front end nodes (FEA, FEB, FEC, FED, FEE) of the plurality of internal networks (NETA, NETB, NETC, NETD, NETE) are electrically isolated from the at least one intermediate node, and said transferring of the data from the at least one intermediate node to the front end node (FEA, FEB, FEC, FED, FEE) of the at least one internal network further comprises the steps of:
electronically isolating the at least one intermediate node from the front end node (FEA, FEB, FEC, FED, FEE) of the external network (NETA, NETB, NETC, NETD, NETE),
a) electronically isolating the at least one intermediate nodes from the front end nodes (FEA, FEB, FEC, FED, FEE) of all but one of the plurality of internal networks (NETA, NETB, NETC, NETD, NETE),
b) transferring the data from the at least one intermediate node to the front end node (FEA, FEB, FEC, FED, FEE) of a connected internal network (NETA, NETB, NETC, NETD, NETE), and
repeating a) and b) for each of the plurality of internal networks (NETA, NETB, NETC, NETD, NETE).

20. The method of Claim 5, wherein the at least one intermediate node comprises a magnetic storage device.

21. The method of Claim 20, wherein the data is always written to and read from a same position of the magnetic storage device.

22. The method of Claim 5, wherein the first front end node (FE1) of the external network (NET1) is always physically disconnected from the front ends of all networks.

23. The method of Claim 5, wherein the at least one intermediate node comprises a memory device.

24. The method of Claim 5, wherein the at least one intermediate node comprises a member of the group consisting of a computer, server, a workstation, a personal computer or dedicated hardware.

25. The method of Claim 1, further comprising determining whether the data has been successfully transferred to the destination in the internal network (NET2).

26. The method of Claim 25, wherein
determining whether the data has been successfully transferred to the destination in the internal network (NET2) includes determining whether the data has been transferred to the destination within a predetermined time period.

27. The method of Claim 1, wherein the said primitive network (PN) is not capable of transmitting data from the second front end node (FE2) of the internal network (NET2) to the first front end node (FE1) of the external network (NET1).

28. The method of Claim 1, further comprising the step of:
inspecting the data received by at least one front end node (FE2) and deciding whether to block the transfer of the data received.

29. The method of Claim 1, wherein after said receiving data and before said transmitting of the selected data over the internal network (NET2) to the destination, the respective second front end node (FE2) can modify the data.

30. The method of Claim 1, wherein transmitting the filtered data from the first front end node (FE1) of the external network (NET1) to the second front end node (FE2) of the internal network (NET2) over at least one primitive network (PN) comprises:
transmitting the filtered data from the first front end node (FE1) of the external network (NET1) to an intermediate node over a first primitive network (PN1) using a second telecommunication protocol stack different from the first telecommunication protocol stack;
transmitting the filtered data from the interned late node to the second front end node (FE2) of the internal network (NET2) over a second primitive network (PN2).

31. The method of Claim 30, further comprising the step of:
inspecting the data received by the intermediate node and deciding whether to block the transfer of the data received.

32. The method of Claim 30, wherein after said transmitting of the filtered data from the first front end node (FE1) of the external network (NET1) to an intermediate node over a first primitive network (PN1), the intermediate node can modify the data.

33. The method of claim 5, wherein
the intermediate node comprises at least a first and second storage device, and said transferring of data from the first front end node (FE1) of the external network (NET1) to at least one intermediate node comprises connecting one of the first and second storage devices to the first front end node (FE1) of the external network (NET1) while electrically isolating said one of the first and second storage devices from the second front end node (FE2) of the internal network (NET2), and connecting the other of the first and second storage devices to the second front end node (FE2) of the internal network (NET2) while electrically isolating the other of the first and second storage devices from the first front end node (FE 1) of the external network (NET1),
transferring data from the first front end node (FE1) of the external network (NET1) to said one of the first and second storage device while transferring data from the second front end node (FE2) of the internal network (NET2) to the other of the first and second storage devices,
connecting said one of the first and second storage devices to the second front end node (FE2) of the internal network (NET2) while electrically isolating said one of the first and second storage devices from the first front end node (PE1) of the external network (NET1), and connecting the other of the first and second storage devices to the first front end node (FE1) of the external network (NET1) while electrically isolating the other of the first and second storage devices from the second front end node (FE2) of the internal network (NET2), and
transferring data from said one of the first and second storage devices to the second front end node (FE2) of the internal network (NET2) while transferring data from the other of the first and second storage devices to the first front end node (FE1) of the external network (NET1).

34. The method of Claim 1, wherein the second front end node (FE2) of internal network (NET2), together with the telecommunication protocol stack of the at least one primitive network (PN), can restrict transmissions coming from and being passed to the at least one primitive network to at least one of a specific destination in the internal network and a specific source in the external network.

35. The method of claim 1, further comprising implementing the first front end node (FE1) of the external network (NET1), the second front end node (FE2) of the internal network (NET2) and the at least one primitive network (PN) by the same organizational entity such that the organizational entity controls operation of the first front end node (FE1) of the external network (NET1), the second front end node (FE2) of the internal network (NET2) and the at least one primitive network (PN).

36. The method of claim 35, wherein said implementing comprises implementing the first front end node (FE1) of the external network (NET1), the second front end node (FE2) of the internal network (NET2) and the at least one primitive network (PN) at the same office of the organizational entity.

37. The method of claim 30, further comprising implementing the first front end node (FE1) of the external network (NET1), the second front end node (FE2) of the internal network (NET2), the first primitive network (PN1), the intermediate node and the second primitive network (PN2) by the same organizational entity such that the organizational entity controls operation of the first front end node (FE1) of the external network (NET1), the second front end node (FE2) of the internal network (NET2), the first primitive network (PN1), the intermediate node and the second primitive network (PN2).

38. The method of claim 37, wherein said implementing comprises implementing the first front end node (FE1) of the external network (NET1), the second front end node (FE2) of the internal network (NET2), the first primitive network (PN1), the intermediate node and the second primitive network (PN2) at the same office of the organizational entity.

39. The method of claim 1, further comprising providing, by the second front end node (FE2) of the internal network (NET2), data for encapsulating the filtered data into the third telecommunication protocol stack.

40. The method of claim 30, further comprising providing, by the second front end node (FE2) of the internal network (NET2), data for encapsulating the filtered data into the third telecommunication protocol stack.

41. The method of claim 1, wherein said inspecting prevents control data in the data received over the external network (NET1) from passing through to the internal network (NET2).

42. The method of claim 30, wherein said inspecting prevents control data in the data received over the origin network (NET1) from passing through to the internal network (NET2).

43. A computer network comprising:
an external network (NET1) having a first front end node (FE1) configured to receive data complying with a first telecommunication protocol stack comprising a first plurality of layers,
an internal network (NET2) having a second front end node (FE2), wherein the internal network (NET2) communicates using data complying with a third telecommunication protocol stack comprising a third plurality of layers; and
a primitive network (PN) for transmitting data and ensuring security isolation between said external network (NET1) and said internal network (NET2), said primitive network (PN) being connected to said first front end node (FE1) and to said second front end node (FE2), and being dedicated solely to connect the internal network (NET2) to the external network (NET1), said primitive network (PN) supporting a second telecommunication protocol stack different from said first and third telecommunication protocol stacks;
said primitive network (PN) providing the mechanism to transfer data between said first (FE1) and second (FE2) front-end nodes, so that all the data communication between the external network (NET1) and the internal network (NET2) passes through said primitive network;
wherein:
- said first front-end node (FE1) is configured:
to break all layers of said first telecommunication protocol stack, in order to access the information in said layers;
to inspect said accessed information for filtering data and deciding which data are to be forwarded to the internal network (NET2);
to encapsulate filtered data according to said second telecommunication protocol stack;
- said primitive network is configured to transmit the encapsulated data from the first front end node (FE1) to the second front end node (FE2);
- said second front-end node (FE1) is configured:
to receive said encapsulated data and, when an ultimate destination of the transmitted data is not the second front end node (FE2), to break all layers of said second telecommunication protocol stack, in order to access the information in said layers;
to further inspect said accessed information for further filtering said received data to decide which data are to be forwarded to the internal network (NET2);
to encapsulate said further filtered data according to said third telecommunication protocol stack;
to transmit said further filtered data from the second front end node (FE2) to the destination, over the internal network (NET2).

44. The computer network according to Claim 43, wherein the first telecommunication protocol stack and the third telecommunication protocol stack are the same telecommunication protocol stack.

45. The computer network according to Claim 44, wherein the first and third telecommunication protocol stacks comprise protocols selected from the group consisting of TCP/IP, DECnet and SNA.

46. The computer network according to Claim 43, wherein the telecommunication protocol stack of the primitive network (PN) comprises protocols selected from the list consisting of SCSI, SCSI-2, SCSI-3, SPI, Fast-20, Fast-40, LVD, parallel data port, serial data port, USB, RS-232, ethernet, token ring, FDDI and ATM.

47. The computer network according to Claim 43, wherein the primitive network (PN) is further configured to transfer the data from the first front end node (FE1) of the external network (NET1) to at least one intermediate node and then transfer the data from the at least one intermediate node to the second front end node (FE2) of the internal network (NET2).

48. The computer network according to claim 47, wherein the primitive network (PN) has a plurality of intermediate nodes and is further configured to transfer the information between the plurality of intermediate nodes prior to being transferred to the second front end node (FE2) of the internal network (NET2).

49. The computer network according to Claim 47, wherein the at least one intermediate node comprises a magnetic storage device.

50. The computer network according to Claim 49, wherein
the magnetic storage device has a read/write mode and a read-only mode, and
the magnetic storage device is normally in the read-only mode and is placed in the read/write mode only in response to a control signal.

51. The computer network according to Claim 49, wherein the data is always written to a same position of the magnetic storage device.

52. The computer network according to Claim 47, wherein the first front end node (FE1) of the external network (NET1) is always physically disconnected from the second front end node (FE2) of the internal network (NET2).

53. The computer network according to Claim 47, wherein the at least one intermediate node comprises a memory device.

54. The computer network according to Claim 53, wherein the electronic memory includes a memory element,
a switching circuit changing connection to the memory element between the first front end node (FE1) of the external network (NET1) and the second front end node (FE2) of the internal network (NET2), and
a plurality of other circuits, and
except for the memory element, the electronic memory is configured to be reset during each change of state of the switching circuit.

55. The computer network according to Claim 53, wherein:
the memory device has a read/write mode and a read-only mode, and
the memory device is normally in the read-only mode and is placed in the read/write mode only in response to a control signal.

56. The computer network according to Claim 47, wherein the at least one intermediate node comprises a computer.

57. The computer network according to Claim 47, wherein the first front end node (FE1) of the external network (NET1) is always electrically isolated from the second front end node (FE2) of the internal network (NET2).

58. The computer network according to Claim 57, further comprising:
means for constantly verifying that the first front end node (FE1) of the external network (NET1) is always electrically isolated from the second front end node (FE2) of the internal network (NET2).

59. The computer network according to Claim 58, wherein the means for constantly verifying that the first front end node (FE1) of the external network (NET1) is always electrically isolated from the second front end node (FE2) of the internal network (NET2) includes
a periodic wave generator generating a periodic wave on lines connected to the front end node (FE1, FE2) of one of the internal network (NET2) and external network (NET1), and
a detector detecting presence of the periodic wave one lines connected to the front end node (FE1, FE2) of one of the external network (NET1) and the internal network (NET2).

60. The computer network according to Claim 47, wherein
the at least one intermediate node includes a circuit to prevent the second front end node (FE2) of the internal network (NET2) from transferring any data to said at least one intermediate node.

61. The computer network of claim 47, further comprising means for determining whether the data has been successfully transferred to the second front end node (FE2) of the internal network (NET2) from the origin network (NET1) via the at least one intermediate node by determining whether the data has been transferred to the second front end node (FE2) of the internal network (NET2) within a predetermined time period.

62. The computer network according to Claim 43, wherein the said primitive network (PN) is not capable of transmitting data from the second front end node (FE2) of the internal network (NET2) to the first front end node (FE1) of the external network (NET1).

63. The computer network according to Claim 43, further comprising
means for inspecting the data received at each front end node (FE1, FE2) and deciding whether to block the transfer of the data received at each front end node (FE1, FE2).

64. The computer network according to Claim 43, wherein the front end node (FE1, FE2) of at least one of the external network (NET1) and the internal network (NET2) inspects and modifies the data received via the least one primitive network (PN).

65. The computer network according to Claim 47, wherein the at least one intermediate node includes a switching circuit configured to connect the at least one intermediate node to the first front end node (FE1) of the external network (NET1) while electrically isolating the intermediate node from the second front end node (FE2) of the internal network (NET2), and then connect the at least one intermediate node to the second front end node (FE2) of the internal network (NET2) while electrically isolating the intermediate node from the first front end node (FE1) of the external network (NET1).

66. The computer network according to Claim 65, wherein the at least one intermediate node further includes a storage device for storing the data transferred from the respective front end nodes (FE1, FE2), and except for the storage device, all elements of the intermediate node are configured to reset during each connection change of the switching circuit.

67. The computer network according to claim 42, wherein the first front end node (FE1), the second front end node (FE2) and the at least one primitive network (PN) are implemented by the same organizational entity such that the organizational entity controls operation of the first front end node (FE1), the second front end node (FE2) and the at least one primitive network (PN).

68. The computer network according to claim 66, wherein the first front end node (FE1), the second front end node (FE2) and the at least one primitive network (PN) are implemented at the same office of the organizational entity.

69. The computer network according to claim 42, wherein the second front end node (FE2) is configured to provide data for encapsulating the filtered data into the at least second telecommunication protocol stack.

70. The computer network according to claim 42, wherein said external network (NET1) is configured to prevent control data from the data received over the external network (NET1) from passing through to the internal network (NET2).

71. A machine readable medium having stored thereon instructions executable by a machine to perform the method of transmitting data and ensuring security isolation in accordance with claims 1-42.

## Patentansprüche

1. Verfahren zum Übermitteln von Daten und Gewährleisten von Sicherheitsisolation zwischen einem externen Netzwerk (NET1), worin Daten einen eine erste Mehrzahl von Ebenen aufweisenden ersten Telekommunikationsprotokollstapel befolgen, und einem internen Netzwerk (NET2), worin Daten einen eine dritte Mehrzahl von Ebenen aufweisenden dritten Telekommunikationsprotokollstapel befolgen, wobei das Verfahren umfasst:
- Bereitstellen eines ersten (FE1) und eines zweiten (FE2), jeweils dem externen Netzwerk (NET1) und dem internen Netzwerk (NET2) zugeordneten, Frontend-Knotens zwischen dem externen Netzwerk (NET1) und dem internen Netzwerk (NET2),
- Bereitstellen eines primitiven Netzwerks (PN) zwischen dem ersten (FE1) und dem zweiten (FE2) Frontend-Knoten, das allein dazu bestimmt ist, das interne Netzwerk (NET2) mit dem externen Netzwerk (NET1) zu verbinden, worin:
das primitive Netzwerk (PN) den Mechanismus zur Datenübertragung zwischen dem ersten (FE1) und dem zweiten (FE2) Frontend-Knoten bereitstellt, so dass die gesamte Datenkommunikation zwischen dem externen Netzwerk (NET1) und dem internen Netzwerk (NET2) durch das primitive Netzwerk hindurchgeht;
wobei das primitive Netzwerk einen zweiten Telekommunikationsprotokollstapel unterstützt, der sich von den ersten und dritten Protokollstapeln unterscheidet;
- Empfangen, an dem ersten Frontend-Knoten (FE1), von Daten von dem externen Netzwerk (NET1), die für das interne Netzwerk (NET2) bestimmt sind, wobei die Daten den ersten Telekommunikationsprotokollstapel befolgen;
- wobei an dem ersten Frontend-Knoten (FE1) alle Ebenen des ersten Telekommunikationsprotokollstapels durchgebrochen werden, um auf die Information in den Ebenen zuzugreifen;
- Inspizieren der zugegriffenen Information zur Datenfilterung und Entscheidung, welche Daten zum internen Netzwerk (NET2) weitergeleitet werden sollen;
- Verkapseln der gefilterten Daten gemäß dem zweiten Telekommunikationsprotokollstapel;
- Senden der verkapselten Daten von dem ersten Frontend-Knoten (FE1) zu dem zweiten Frontend-Knoten (FE2) über das primitive Netzwerk (PN);
- Empfangen der verkapselten Daten an dem zweiten FrontendKnoten (FE2);
- wenn ein letztendliches Ziel der gesendeten Daten nicht der zweite Frontend-Knoten (FE2) ist, an dem zweiten Frontend-Knoten (FE2) alle Ebenen des zweiten Telekommunikationsprotokollstapels durchbrochen werden, um auf die Information in den Ebenen zuzugreifen;
- weiteres Inspizieren der zugegriffenen Information zur weiteren Filterung der empfangenen Daten zur Entscheidung, welche Daten zum internen Netzwerk (NET2) weitergeleitet werden sollen;
- Verkapseln der weitergefilterten Daten gemäß dem dritten Telekommunikationsprotokollstapel;
- Senden der weitergefilterten Daten von dem zweiten Frontend-Knoten (FE2) zu dem Ziel über das interne Netzwerk (NET2).

2. Das Verfahren von Anspruch 1, worin der erste Telekommunikationsprotokollstapel und der dritte Telekommunikationsprotokollstapel der gleiche Telekommunikationsprotokollstapel sind.

3. Das Verfahren von Anspruch 2, worin der erste Telekommunikationsprotokollstapel und der dritte Telekommunikationsprotokollstapel Protokolle aufweisen, die aus der Gruppe gewählt sind, die aus TCP/IP, DECnet, Novell und SNA besteht.

4. Das Verfahren von Anspruch 1, worin der Telekommunikationsprotokollstapel des primitiven Netzwerks Protokolle aufweist, die aus der Gruppe ausgewählt sind, die aus SCSI, SCSI-2, SCSI-3, SPI, Fast-20, Fast-40, LVD, paralleler Datenport, serieller Datenport, USB, RS-232, Ethernet, token ring, FDDI und ATM besteht.

5. Das Verfahren von Anspruch 1, worin das Senden der Daten von dem ersten Frontend-Knoten (FE1) des externen Netzwerks (NET1) zu dem zweiten Frontend-Knoten (FE2) des internen Netzwerks (NET2) umfasst:
Übertragen von Daten von dem ersten Frontend-Knoten (FE1) des externen Netzwerks (NET1) zu zumindest einem Zwischenknoten; und
Übertragen der Daten von dem zumindest einem Zwischenknoten zu dem zweiten Frontend-Knoten (FE2) des internen Netzwerks (NET2).

6. Das Verfahren von Anspruch 5, ferner umfassend:
Inspizieren der von zumindest einem Frontend-Knoten (FE1, FE2) empfangenen Daten und Entscheiden, ob die Übertragung der empfangenen Daten blockiert werden soll.

7. Das Verfahren von Anspruch 5, worin, nach dem Datenempfang und vor dem Senden der ausgewählten Daten über das interne Netzwerk (NET2) zu dem Ziel, der jeweilige zweite Frontend-Knoten (FE2) die Daten modifizieren kann.

8. Das Verfahren von Anspruch 5, worin, vor dem Übertragen der Daten von dem ersten Frontend-Knoten (FE1) des externen Netzwerks (NET1) zu zumindest einem Zwischenknoten, der zumindest eine Zwischenknoten von dem zweiten Frontend-Knoten (FE2) des internen Netzwerks (NET2) elektrisch isoliert wird, und das Übertragen der Daten von dem zumindest einem Zwischenknoten zu dem zweiten Front-end-Knoten (FE2) des internen Netzwerks (NET2) ferner umfasst:
elektronisches Isolieren des zumindest einen Zwischenknotens von dem ersten Frontend-Knoten (FE1) des externen Netzwerks (NET1), elektronisches Verbinden des zumindest einen Zwischenknotens mit dem zweiten Frontend-Knoten (FE2) des internen Netzwerks (NET2), und
Übertragen der Daten von dem zumindest einen Zwischenknoten zu dem zweiten Frontend-Knoten (FE2) des internen Netzwerks (NET2).

9. Das Verfahren von Anspruch 8, worin der zumindest eine Zwischenknoten eine Speichervorrichtung ist.

10. Das Verfahren von Anspruch 9, worin nach der elektronischen Isolierung des zumindest einen Zwischenknotens von dem ersten Frontend-Knoten (FE1) des externen Netzwerks (NET1) die Speichervorrichtung, außer sein Speicherelement, zurückgesetzt wird.

11. Das Verfahren von Anspruch 9, worin
die Speichervorrichtung einen Lese/Schreibmodus und einen Nur-Lesemodus hat, und
die Speichervorrichtung normalerweise im Nur-Lesemodus ist und nur in Antwort auf ein Steuersignal in dem Lese/Schreibmodus versetzt wird.

12. Das Verfahren von Anspruch 8, worin, vor dem Übertragen der Daten von dem zumindest einen Zwischenknoten zu dem zweiten FrontendKnoten (FE2) des internen Netzwerks (NET2), der zumindest eine Zwischenknoten in einen Nur-Lesemodus versetzt wird.

13. Das Verfahren von Anspruch 8, das ferner den Schritt umfasst:
Inspizieren der von zumindest einem Frontend-Knoten (FE1, FE2) empfangenen Daten und Entscheiden, ob die Übertragung der empfangenen Daten blockiert werden soll.

14. Das Verfahren von Anspruch 8, worin, nach dem Empfang von Daten vor dem Senden der ausgewählten Daten über das interne Netzwerk (NET2) zu dem Ziel, der jeweilige zweite Frontend-Knoten (FE2) die Daten modifizieren kann.

15. Das Verfahren von Anspruch 5, worin der erste Frontend-Knoten (FE1) des externen Netzwerks (NET1) von dem zweiten Frontend-Knoten (FE2) des internen Netzwerks (NET2) immer elektrisch isoliert ist.

16. Das Verfahren von Anspruch 15, das ferner umfasst:
Konstantes Verifizieren mit einer Steuereinheit, dass der erste Front-end-Knoten (FE1) des externen Netzwerks (NET1) von dem zweiten Frontend-Knoten (FE2) des internen Netzwerks (NET2) immer elektrisch isoliert ist.

17. Das Verfahren von Anspruch 16, worin das Verifizieren, dass der erste Frontend-Knoten (FE1) des externen Netzwerks (NET1) von dem zweiten Frontend-Knoten (FE2) des internen Netzwerks (NET2) immer elektrisch isoliert ist, enthält, auf von einem Frontend-Knoten (FE1, FE2) kommende Signalleitungen eine periodische Welle aufzulagern und zu detektieren, ob die Welle auf Signalleitungen vorhanden ist, die von dem anderen Frontend-Knoten (FE1, FE2) kommen.

18. Das Verfahren von Anspruch 16, worin das Verifizieren, dass der erste Frontend-Knoten (FE1) des externen Netzwerks (NET1) von dem zweiten Frontend-Knoten (FE2) des internen Netzwerks (NET2) immer elektrisch isoliert ist, enthält, auf von einem Frontend-Knoten (FE1, FE2) kommenden Signalleitungen eine DC-Signalverschiebung zu erzeugen und zu detektieren, ob es eine Verschiebung des DC-Signals auf Signalleitungen eines anderen Frontend-Knotens (FE1, FE2) gibt.

19. Das Verfahren von Anspruch 5, worin eine Mehrzahl von internen Netzwerken (NETA, NETB, NETC, NETD, NETE) vorhanden sind, wobei jedes Netzwerk einen Netzwerk-Frontendknoten (FEA, FEB, FEC, FED, FEE) aufweist, wobei vor dem Übertragen der Daten von dem Front-end-Knoten des externen Netzwerks (NETA, NETB, NETC, NETD, NETE) zu zumindest einem Zwischenknoten, die Frontend-Knoten (FEA, FEB, FEC, FED, FEE) der Mehrzahl von internen Netzwerken (NETA, NETB, NETC, NETD, NETE) von dem zumindest einen Zwischenknoten elektrisch isoliert werden, und die Übertragung der Daten von dem zumindest einem Zwischenknoten zu dem Frontend-Knoten (FEA, FEB, FEC, FED, FEE) des zumindest einen internen Netzwerks ferner die Schritte umfasst:
elektronisches Isolieren des zumindest einen Zwischenknotens von dem Frontend-Knoten (FEA, FEB, FEC, FED, FEE) des externen Netzwerks (NETA, NETB, NETC, NETD, NETE),
a) elektronisches Isolieren des zumindest einen Zwischenknotens von den Frontend-Knoten (FEA, FEB, FEC, FED, FEE) von allen bis auf eines der Mehrzahl von internen Netzwerken (NETA, NETB, NETC, NETD, NETE),
b) Senden der Daten von dem zumindest einem Zwischenknoten zu dem Frontend-Knoten (FEA, FEB, FEC, FED, FEE) eines angeschlossenen internen Netzwerks (NETA, NETB, NETC, NETD, NETE), und
Wiederholen von a) und b) für jedes der Mehrzahl von internen Netzwerken (NETA, NETB, NETC, NETD, NETE).

20. Das Verfahren von Anspruch 5, worin der zumindest eine Zwischenknoten eine magnetische Speichervorrichtung aufweist.

21. Das Verfahren von Anspruch 20, worin die Daten immer in die gleiche Position der magnetischen Speichervorrichtung geschrieben und davon gelesen werden.

22. Das Verfahren von Anspruch 5, worin der erste Frontend-Knoten (FE1) des externen Netzwerks (NET1) von den Frontenden aller Netzwerke immer physikalisch getrennt ist.

23. Das Verfahren von Anspruch 5, worin der zumindest eine Zwischenknoten eine Speichervorrichtung aufweist.

24. Das Verfahren von Anspruch 5, worin der zumindest eine Zwischenknoten ein Element mit der Gruppe aufweist, die aus einem Computer, einem Server, einer Arbeitsstation, einem Personal Computer oder einer gesonderten Hardware besteht.

25. Das Verfahren von Anspruch 1, das ferner umfasst, zu bestimmen, ob die Daten erfolgreich zu dem Ziel des internen Netzwerks (NET2) übertragen worden sind.

26. Das Verfahren von Anspruch 25, worin
das Bestimmen, ob die Daten erfolgreich zu dem Ziel des internen Netzwerks (NET2) übertragen worden sind, die Bestimmung enthält, ob die Daten zu dem Ziel innerhalb einer vorbestimmten Zeitperiode übertragen worden sind.

27. Das Verfahren von Anspruch 1, worin das primitive Netzwerk (PN) nicht in der Lage ist, Daten von dem zweiten Frontend-Knoten (FE2) des internen Netzwerks (NET2) zu dem ersten Frontend-Knoten (FE1) des externen Netzwerks (NET1) zu senden.

28. Das Verfahren von Anspruch 1, das ferner den Schritt umfasst:
Inspizieren der von zumindest einem Frontend-Knoten (FE2) empfangenen Daten und Entscheiden, ob die Übertragung der empfangenen Daten blockiert werden soll.

29. Das Verfahren von Anspruch 1, worin, nach dem Datenempfang und vor dem Senden der selektierten ausgewählten Daten nur das interne Netzwerk (NET2) zu dem Ziel, der jeweilige zweite Frontend-Knoten (FE2) die Daten modifizieren kann.

30. Das Verfahren von Anspruch 1, worin das Senden der gefilterten Daten von dem ersten Frontend-Knoten (FE1) des externen Netzwerks (NET1) zu dem zweiten Frontend-Knoten (FE2) des internen Netzwerks (NET2) über zumindest ein primitives Netzwerk (PN) umfasst:
Senden der gefilterten Daten von dem ersten Frontend-Knoten (FE1) des externen Netzwerks (NET1) zu einem Zwischenknoten über ein erstes primitives Netzwerk (PN1) unter Verwendung eines zweiten Telekommunikationsprotokollstapels, der sich von dem ersten Telekommunikationsprotokollstapel unterscheidet;
Senden der gefilterten Daten von dem Zwischenknoten zu dem zweiten Frontend-Knoten (FE2) des internen Netzwerks (NET2) über ein zweites primitives Netzwerk (PN2).

31. Das Verfahren von Anspruch 30, das ferner den Schritt umfasst:
Inspizieren der von dem Zwischenknoten empfangenen Daten und Entscheiden, ob die Übertragung der empfangenen Daten blockiert werden soll.

32. Das Verfahren von Anspruch 30, worin nach der Übertragung der gefilterten Daten von dem ersten Frontend-Knoten (FE1) des externen Netzwerks (NET1) zu einem Zwischenknoten über ein erstes primitives Netzwerk (PN1) der Zwischenknoten die Daten modifizieren kann.

33. Das Verfahren von Anspruch 5, worin:
der Zwischenknoten zumindest eine erste und eine zweite Speichervorrichtung aufweist, und das Übertragen der Daten von dem ersten Frontend-Knoten (FE1) des externen Netzwerks (NET1) zu zumindest einem Zwischenknoten umfasst: Verbinden von einer der ersten und zweiten Speichervorrichtungen mit dem ersten Frontend-Knoten (FE1) des externen Netzwerks (NET1), während die eine der ersten und zweiten Speichervorrichtungen von den zweiten Frontend-Knoten (FE2) des internen Netzwerks (NET2) elektrisch isoliert wird, und Verbinden der anderen der ersten und zweiten Speichervorrichtungen mit dem zweiten Frontend-Knoten (FE2) des internen Netzwerks (NET2), während die andere der ersten und zweiten Speichervorrichtungen von dem ersten Frontend-Knoten (FE1) des externen Netzwerks (NET1) elektrisch isoliert wird,
Übertragen der Daten von dem ersten Frontend-Knoten (FE1) des externen Netzwerks (NET1) zu der einen der ersten und zweiten Speichervorrichtungen, während Daten von dem zweiten Frontend-Knoten (FE2) des internen Netzwerks (NET2) zu der anderen der ersten und zweiten Speichervorrichtungen übertragen werden,
Verbinden der einen der ersten und zweiten Speichervorrichtungen mit dem zweiten Frontend-Knoten (FE2) des internen Netzwerks (NET2), während die eine der ersten und zweiten Speichervorrichtungen von dem ersten Frontend-Knoten (FE1) des externen Netzwerks (NET1) elektrisch isoliert wird, und Verbinden der anderen der ersten und zweiten Speichervorrichtungen mit dem ersten Frontend-Knoten (FE1) des externen Netzwerks (NET1), während die andere der ersten und zweiten Speichervorrichtungen von dem zweiten Frontend-Knoten (FE2) des internen Netzwerks (NET2) elektrisch isoliert wird, und Übertragen von Daten von der einen der ersten und zweiten Speichervorrichtungen zu dem zweiten Frontend-Knoten (FE2) des internen Netzwerks (NET2), während Daten von der anderen der ersten und zweiten Speichervorrichtungen zu dem ersten Frontend-Knoten (FE1) des externen Netzwerks (NET1) übertragen werden.

34. Das Verfahren von Anspruch 1, worin der zweite Frontend-Knoten (FE2) des internen Netzwerks (NET2), zusammen mit dem Telekommunikationsprotokollstapel des zumindest einen primitiven Netzwerks (PN), Sendungen einschränken kann, die von dem zumindest einen primitiven Netzwerk kommen und zu einem bestimmten Ziel in dem internen Netzwerk und/oder einer spezifischen Quelle in dem externen Netzwerk geleitet werden.

35. Das Verfahren von Anspruch 1, das ferner umfasst: Implementieren des ersten Frontend-Knotens (FE1) des externen Netzwerks (NET1), des zweiten Frontend-Knotens (FE2) des internen Netzwerks (NET2) und des zumindest einen primitiven Netzwerks (PN) durch die gleiche Organisationsentität, so dass die Organisationsentität den Betrieb des ersten Frontend-Knotens (FE1) des externen Netzwerks (NET1), des zweiten Frontend-Knotens (FE2) des internen Netzwerks (NET2) und des zumindest einen primitiven Netzwerks (PN) steuert.

36. Das Verfahren von Anspruch 35, worin das Implementieren umfasst:
Implementieren des ersten Frontend-Knotens (FE1) des externen Netzwerks (NET1), des zweiten Frontend-Knotens (FE2) des internen Netzwerks (NET2) und des zumindest einem primitiven Netzwerks (PN) im gleichen Büro der Organisationsentität.

37. Das Verfahren von Anspruch 30, das ferner umfasst: Implementieren des ersten Frontend-Knotens (FE1) des externen Netzwerks (NET1), des zweiten Frontend-Knotens (FE2) des internen Netzwerks (NET2), des ersten primitiven Netzwerks (PN1), des Zwischenknotens und des zweiten primitiven Netzwerks (PN2) durch die gleiche Organisationsentität, so dass die Organisationsentität den Betrieb des ersten Frontend-Knotens (FE1) des externen Netzwerks (NET1), des zweiten Frontend-Knotens (FE2) des internen Netzwerks (NET2), des ersten primitiven Netzwerks (PN1), des Zwischenknotens und des zweiten primitiven Netzwerks (PN2) steuert.

38. Das Verfahren von Anspruch 37, worin das Implementieren umfasst:
Implementieren des ersten Frontend-Knotens (FE1) des externen Netzwerks (NET1), des zweiten Frontend-Knotens (FE2) des internen Netzwerks (NET2), des ersten primitiven Netzwerks (PN1), des Zwischen- knotens und des zweiten primitiven Netzwerks (NET2) im gleichen Büro der Organisationsentität.

39. Das Verfahren von Anspruch 1, das ferner umfasst, durch den zweiten Frontend-Knoten (FE2) des internen Netzwerks (NET2) Daten zum Verkapseln der gefilterten Daten in den dritten Telekommunikationsprotokollstapel zu liefern.

40. Das Verfahren von Anspruch 30, das ferner umfasst, durch den zweiten Frontend-Knoten (FE2) des internen Netzwerks (NET2) Daten zum Verkapseln der gefilterten Daten in den dritten Telekommunikationsprotokollstapel zu liefern.

41. Das Verfahren von Anspruch 1, worin das Inspizieren verhindert, dass Steuerdaten zu den über das externe Netzwerk (NET1) empfangenen Daten zu dem internen Netzwerk (NET2) geleitet werden.

42. Das Verfahren von Anspruch 30, worin das Inspizieren verhindert, dass Steuerdaten in den über das ursprüngliche Netzwerk (NET1) empfangenen Daten durch das interne Netzwerk (NET2) geleitet werden.

43. Computernetzwerk, umfassend:
ein externes Netzwerk (NET1) mit einem ersten Frontend-Knoten (FE1), der zum Empfang von Daten konfiguriert ist, die einen eine erste Mehrzahl von Ebenen aufweisenden ersten Telekommunikationsprotokollstapel befolgen,
ein internes Netzwerk (NET2) mit einem zweiten Frontend-Knoten (FE2), worin das interne Netzwerk (NET2) unter Verwendung von Daten kommuniziert, die einen eine dritte Mehrzahl von Ebenen aufweisenden dritten Telekommunikationsprotokollstapel befolgen; und
ein primitives Netzwerk (PN) zum Übermitteln von Daten und Gewährleisten von Sicherheitsisolation zwischen dem externen Netzwerk (NET1) und dem internen Netzwerk (NET2), wobei das primitive Netzwerk (PN) mit dem ersten Frontend-Knoten (FE1) und mit dem zweiten Frontend-Knoten (FE2) verbunden ist und allein dazu bestimmt ist, das interne Netzwerk (NET2) mit dem externen Netzwerk (NET1) zu verbinden, wobei das primitive Netzwerk (PN) einen zweiten Telekommunikationsprotokollstapel unterstützt, der sich von den ersten und dritten Telekommunikationsprotokollstapeln unterscheidet;
wobei das primitive Netzwerk (PN) den Mechanismus zur Datenübertragung zwischen dem ersten (FE1) und dem zweiten (FE2) Frontend-Knoten bereitstellt, so dass die gesamte Datenkommunikation zwischen dem externen Netzwerk (NET1) und dem internen Netzwerk (NET2) durch das primitive Netzwerk hindurchgeht;
worin:
- der erste Frontend-Knoten (FE1) konfiguriert ist:
zum Durchbrechen aller Ebenen des ersten Telekommunikationsprotokollstapels, um auf Information in den Ebenen zuzugreifen;
zum Inspizieren der zugegriffenen Information zur Datenfilterung und Entscheiden, welche Daten zu dem internen Netzwerk (NET2) weitergeleitet werden sollen;
zum Verkapseln der gefilterten Daten gemäß dem zweiten Telekommunikationsprotokollstapel;
- worin das primitive Netzwerk konfiguriert ist, um die verkapselten Daten von dem ersten Frontend-Knoten (FE1) zu dem zweiten FrontendKnoten (FE2) zu senden;
- wobei der zweite Frontend-Knoten (FE1) konfiguriert ist:
zum Empfangen der verkapselten Daten, und wenn ein letztendliches Ziel der gesendeten Daten nicht der zweite Frontend-Knoten (FE2) ist,
zum Durchbrechen aller Ebenen des zweiten Telekommunikationsprotokollstapels, um auf die Information in den Ebenen zuzugreifen;
zum weiteren Inspizieren der zugegriffenen Information zur weiteren Filterung der empfangenen Daten zur Entscheidung, welche Daten zu dem internen Netzwerk (NET2) weitergeleitet werden sollen;
zum Verkapseln der weitergefilterten Daten gemäß dem dritten Telekommunikationsprotokollstapel;
zum Senden der weitergefilterten Daten von dem zweiten FrontendKnoten (FE2) zu dem Ziel über das interne Netzwerk (NET2).

44. Das Computernetzwerk gemäß Anspruch 43, worin der erste Telekommunikationsprotokollstapel und der dritte Telekommunikationsprotokollstapel der gleiche Telekommunikationsprotokollstapel sind.

45. Das Computernetzwerk gemäß Anspruch 44, worin die ersten und dritten Telekommunikationsprotokollstapel Protokolle aufweisen, die aus der Gruppe ausgewählt sind, die aus TCP/IP, DECnet und SNA besteht.

46. Das Computernetzwerk gemäß Anspruch 43, worin der Telekommunikationsprotokollstapel des primitiven Netzwerks (PN) Protokolle aufweist, die aus der Liste ausgewählt sind, die aus SCSI, SCSI-2, SCSI-3, SPI, Fast-20, Fast-40, LVD, paralleler Datenport, serieller Datenport, USB, RS-232, Ethernet, token ring, FDDI und ATM besteht.

47. Das Computernetzwerk gemäß Anspruch 43, worin das primitive Netzwerk (PN) weiter konfiguriert ist zum Übertragen der Daten von dem ersten Frontend-Knoten (FE1) des externen Netzwerks (NET1) zu zumindest einem Zwischenknoten und dann Übertragen der Daten von dem zumindest einem Zwischenknoten zu dem zweiten Frontend-Knoten (FE2) des internen Netzwerks (NET2).

48. Das Computernetzwerk gemäß Anspruch 47, worin das primitive Netzwerk (PN) eine Mehrzahl von Zwischenknoten aufweist und ferner konfiguriert ist zum Übertragen der Information zwischen der Mehrzahl von Zwischenknoten vor der Übertragung zu dem zweiten Frontend-Knoten (FE2) des internen Netzwerks (NET2).

49. Das Computernetzwerk gemäß Anspruch 47, worin der zumindest eine Zwischenknoten eine magnetische Speichervorrichtung aufweist.

50. Das Computernetzwerk gemäß Anspruch 49, worin
die magnetische Speichervorrichtung einen Lese/Schreibmodus und einen Nur-Lesemodus hat, und
die magnetische Speichervorrichtung normalerweise im Nur-Lesemodus ist und nur in Antwort auf ein Steuersignal in den Lese/Schreibmodus versetzt wird.

51. Das Computernetzwerk gemäß Anspruch 49, worin die Daten immer auf die gleiche Position der magnetischen Speichervorrichtung geschrieben werden.

52. Das Computernetzwerk gemäß Anspruch 47, worin der erste Frontend-Knoten (FE1) des externen Netzwerks (NET1) von dem zweiten Front-end-Knoten (FE2) des internen Netzwerks (NET2) immer physikalisch getrennt ist.

53. Das Computernetzwerk gemäß Anspruch 47, worin der zumindest eine Zwischenknoten eine Speichervorrichtung aufweist.

54. Das Computernetzwerk gemäß Anspruch 53, worin der elektronische Speicher enthält:
ein Speicherelement,
einen Schaltkreis, der die Verbindung mit dem Speicherelement zwischen dem ersten Frontend-Knoten (FE1) des externen Netzwerks (NET1) und dem zweiten Frontend-Knoten (FE2) des internen Netzwerks (NET2) ändert, und
eine Mehrzahl von anderen Schaltungen, und
außer das Speicherelement, der elektronische Speicher konfiguriert ist, während jedes Änderungszustands des Schaltkreises rückgesetzt zu werden.

55. Das Computernetzwerk gemäß Anspruch 53, worin
die Speichervorrichtung einen Lese/Schreibmodus und einen Nur-Lesemodus hat, und
die Speichervorrichtung normalerweise im Nur-Lesemodus ist und nur in Antwort auf ein Steuersignal in dem Lese/Schreibmodus versetzt wird.

56. Das Computernetzwerk gemäß Anspruch 47, worin der zumindest eine Zwischenknoten einen Computer aufweist.

57. Das Computernetzwerk gemäß Anspruch 47, worin der erste Frontend-Knoten (FE1) des externen Netzwerks (NET1) von dem zweiten Front-end-Knoten (FE2) des internen Netzwerks (NET2) immer elektrisch isoliert ist.

58. Das Computernetzwerk gemäß Anspruch 57, ferner umfassend:
ein Mittel zum konstanten Verifizieren, dass der erste Frontend-Knoten (FE1) des externen Netzwerks (NET1) von dem zweiten Frontend-Knoten (FE2) des internen Netzwerks (NET2) immer elektrisch isoliert ist.

59. Das Computernetzwerk gemäß Anspruch 58, worin das Mittel zum konstanten Verifizieren, dass der erste Frontend-Knoten (FE1) des externen Netzwerks (NET1) von dem zweiten Frontend-Knoten (FE2) des internen Netzwerks (NET2) immer elektrisch isoliert ist, enthält:
einen periodischen Wellengenerator, der eine periodische Welle auf Leitungen erzeugt, die mit dem Frontend-Knoten (FE1, FE2) von einem des internen Netzwerks (NET2) und des externen Netzwerks (NET1) verbunden ist, und
einen Detektor zum Detektieren des Vorhandenseins der periodischen Welle auf Leitungen, die mit dem Frontend-Knoten (FE1, FE2) von einem des externen Netzwerks (NET1) und des internen Netzwerks (NET2) verbunden ist.

60. Das Computernetzwerk gemäß Anspruch 47, worin der zumindest eine Zwischenknoten eine Schaltung enthält, um zu verhindern, dass der zweite Frontend-Knoten (FE2) des internen Netzwerks (NET2) irgendwelche Daten zu dem zumindest einem Zwischenknoten überträgt.

61. Das Computernetzwerk von Anspruch 47, das ferner umfasst: Mittel zum Bestimmen, ob die Daten von dem ursprünglichen Netzwerk (NET1) über den zumindest einen Zwischenknoten zu dem zweiten Frontend-Knoten (FE2) des internen Netzwerks (NET2) erfolgreich übertragen worden sind, durch Bestimmung, ob die Daten zu dem zweiten Frontend-Knoten (FE2) des internen Netzwerks (NET2) innerhalb einer vorbestimmten Zeitperiode übertragen worden sind.

62. Das Computernetzwerk gemäß Anspruch 43, worin das primitive Netzwerk (PN) nicht in der Lage ist, Daten von dem zweiten Frontend-Knoten (FE2) des internen Netzwerks (NET2) zu dem ersten Frontend-Knoten (FE1) des externen Netzwerks (NET1) zu senden.

63. Das Computernetzwerk gemäß Anspruch 43, ferner umfassend:
Mittel zum Inspizieren der von jedem Frontend-Knoten (FE1, FE2) empfangenen Daten und Entscheiden, ob die Übertragung der an jedem Frontend-Knoten (FE1, FE2) empfangenen Daten blockiert werden soll.

64. Das Computernetzwerk gemäß Anspruch 43, worin der Frontend-Knoten (FE1, FE2) von zumindest einem des externen Netzwerks (NET1) und des internen Netzwerks (NET2) die über das zumindest eine primitve Netzwerk (PN) empfangenen Daten inspiziert und modifiziert.

65. Das Computernetzwerk gemäß Anspruch 47, worin der zumindest eine Zwischenknoten einen Schaltkreis enthält, der konfiguriert ist, um den zumindest einen Zwischenknoten mit dem ersten Frontend-Knoten (FE1) des externen Netzwerks (NET1) zu verbinden, während der Zwischenknoten von dem zweiten Frontend-Knoten (FE2) des internen Netzwerks (NET2) elektrisch isoliert wird, und dann den zumindest einen Zwischenknoten mit dem zweiten Frontend-Knoten (FE2) des internen Netzwerks (NET2) zu verbinden, während der Zwischenknoten von dem ersten Frontend-Knoten (FE1) des externen Netzwerks (NET1) elektrisch isoliert wird.

66. Das Computernetzwerk gemäß Anspruch 65, worin der zumindest eine Zwischenknoten ferner eine Speichervorrichtung enthält, um die von den jeweiligen Frontend-Knoten (FE1, FE2) übertragenen Daten zu Speichern, und außer die Speichervorrichtung, alle Elemente des Zwischenknotens konfiguriert sind, während jedes Verbindungswechsels des Schaltkreises rückgesetzt zu werden.

67. Das Computernetzwerk gemäß Anspruch 42, worin der erste Frontend-Knoten (FE1), der zweite Frontend-Knoten (FE2) und das zumindest eine primitive Netzwerk (PN) durch die gleiche Organisationsentität implementiert sind, so dass die Organisationsentität den Betrieb des ersten Frontend-Knotens (FE1), des zweiten Frontend-Knotens (FE2) und des zumindest einen primitiven Netzwerks (PN) steuert.

68. Das Computernetzwerk gemäß Anspruch 66, worin der erste Frontend-Knoten (FE1), der zweite Frontend-Knoten (FE2) und das zumindest eine primitive Netzwerk (PN) im gleichen Büro der Organisationsentität implementiert sind.

69. Das Computernetzwerk gemäß Anspruch 42, worin der zweite Front-end-Knoten (FE2) konfiguriert ist, um Daten zum Verkapseln der gefilterten Daten in zumindest den zweiten Telekommunikationsprotokollstapel zu liefern.

70. Das Computernetzwerk gemäß Anspruch 42, worin das externe Netzwerk (NET1) konfiguriert ist, um zu verhindern, dass Steuerdaten von den über das externe Netzwerk (NET1) empfangenen Daten durch das interne Netzwerk (NET2) geleitet werden.

71. Maschinenlesbares Medium, auf dem Anweisungen gespeichert sind, die von einer Maschine zur Durchführung des Verfahrens zum Übermitteln von Daten und Gewährleisten von Sicherheitsisolation gemäß den Ansprüchen 1 bis 42 ausführbar sind.

## Revendications

1. Procédé pour transmettre des données et garantir un isolement de sécurité entre un réseau externe (NET1), dans lequel les données sont conformes à une première pile de protocoles de télécommunication comprenant une première pluralité de couches, et un réseau interne (NET2), dans lequel les données sont conformes à une troisième pile de protocoles de télécommunication comprenant une troisième pluralité de couches, le procédé consistant à :
- prévoir des premier (FE1) et deuxième (FE2) noeuds frontaux entre le réseau externe (NET1) et le réseau interne (NET2), associés au réseau externe (NET1) et au réseau interne (NET2), respectivement ;
- prévoir un réseau primitif (PN) entre lesdits premier (FE1) et deuxième (FE2) noeuds frontaux, dédié uniquement à la connexion du réseau interne (NET2) au réseau externe (NET1), dans lequel
ledit réseau primitif (PN) fournit le mécanisme pour transférer des données entre lesdits premier (FE1) et deuxième (FE2) noeuds frontaux, de sorte que toute la communication de données entre le réseau externe (NET1) et le réseau interne (NET2) passe par ledit réseau primitif ;
ledit réseau primitif supporte une deuxième pile de protocoles de télécommunication différente desdites première et troisième piles de protocoles ;
- recevoir, au niveau du premier noeud frontal (FE1), les données provenant du réseau externe (NET1) destinées au réseau interne (NET2), lesdites données étant conformes à ladite première pile de protocoles de télécommunication ;
- au niveau du premier noeud frontal (FE1), rompre toutes les couches de ladite première pile de protocoles de télécommunication, afin d'accéder aux informations dans lesdites couches ;
- inspecter lesdites informations auxquelles un accès est effectué pour filtrer les données et décider quelles données doivent être envoyées au réseau interne (NET2) ;
- encapsuler les données filtrées conformément à ladite deuxième pile de protocoles de télécommunication ;
- transmettre les données encapsulées du premier noeud frontal (FE1) au deuxième noeud frontal (FE2) sur le réseau primitif (PN) ;
- recevoir lesdites données encapsulées au niveau du deuxième noeud frontal (FE2) ;
- lorsqu'une destination finale des données transmises n'est pas le deuxième noeud frontal (FE2), au niveau dudit deuxième noeud frontal (FE2), rompre toutes les couches de ladite deuxième pile de protocoles de télécommunication, afin d'accéder aux informations dans lesdites couches ;
- inspecter davantage lesdites informations auxquelles un accès est effectué pour filtrer davantage lesdites données reçues pour décider quelles données doivent être envoyées au réseau interne (NET2) ;
- encapsuler lesdites données filtrées davantage conformément à ladite troisième pile de protocoles de télécommunication ;
- transmettre lesdites données filtrées davantage du deuxième noeud frontal (FE2) à la destination, sur le réseau interne (NET2).

2. Procédé selon la revendication 1, dans lequel la première pile de protocoles de télécommunication et la troisième pile de protocoles de télécommunication sont la même pile de protocoles de télécommunication.

3. Procédé selon la revendication 2, dans lequel la première pile de protocoles de télécommunication et la troisième pile de protocoles de télécommunication comprennent des protocoles sélectionnés dans le groupe consistant en TCP/IP, DECnet, Novell et SNA.

4. Procédé selon la revendication 1, dans lequel la pile de protocoles de télécommunication du réseau primitif comprend des protocoles sélectionnés dans le groupe consistant en SCSI, SCSI-2, SCSI-3, SPI, Fast-20, Fast-40, LVD, port de données parallèle, port de données série, USB, RS-232, Ethernet, Token Ring, FDDI et ATM.

5. Procédé selon la revendication 1, dans lequel ladite transmission des données du premier noeud frontal (FE1) du réseau externe (NET1) au deuxième noeud frontal (FE2) du réseau interne (NET2) consiste à :
transférer les données du premier noeud frontal (FE1) du réseau externe (NET1) à au moins un noeud intermédiaire ; et
transférer les données dudit au moins un noeud intermédiaire au deuxième noeud frontal (FE2) du réseau interne (NET2).

6. Procédé selon la revendication 5, consistant en outre à :
inspecter les données reçues par au moins un noeud frontal (FE1, FE2) et décider s'il convient ou non de bloquer le transfert des données reçues.

7. Procédé selon la revendication 5, dans lequel, après ladite réception des données et avant ladite transmission des données sélectionnées sur le réseau interne (NET2) à la destination, le deuxième noeud frontal (FE2) respectif peut modifier les données.

8. Procédé selon la revendication 5, dans lequel, avant ledit transfert de données du premier noeud frontal (FE1) du réseau externe (NET1) à au moins un noeud intermédiaire, ledit au moins un noeud intermédiaire est isolé électriquement du deuxième noeud frontal (FE2) du réseau interne (NET2), et ledit transfert des données dudit au moins un noeud intermédiaire au deuxième noeud frontal (FE2) du réseau interne (NET2) consiste en outre à :
isoler électroniquement ledit au moins un noeud intermédiaire du premier noeud frontal (FE1) du réseau externe (NET1),
connecter électroniquement ledit au moins un noeud intermédiaire au deuxième noeud frontal (FE2) du réseau interne (NET2) , et
transférer les données dudit au moins un noeud intermédiaire au deuxième noeud frontal (FE2) du réseau interne (NET2).

9. Procédé selon la revendication 8, dans lequel ledit au moins un noeud intermédiaire est un dispositif de mémorisation.

10. Procédé selon la revendication 9, dans lequel, après ledit isolement électronique dudit au moins un noeud intermédiaire du premier noeud frontal (FE1) du réseau externe (NET1), le dispositif de mémorisation est réinitialisé, à l'exception de son élément de mémoire.

11. Procédé selon la revendication 9, dans lequel
le dispositif de mémorisation a un mode de lecture/écriture et un mode de lecture seule, et
le dispositif de mémorisation est normalement dans le mode de lecture seule et est mis dans le mode de lecture/écriture uniquement en réponse à un signal de commande.

12. Procédé selon la revendication 8, dans lequel, avant ledit transfert des données dudit au moins un noeud intermédiaire au deuxième noeud frontal (FE2) du réseau interne (NET2), ledit au moins un noeud intermédiaire est mis dans un mode de lecture seule.

13. Procédé selon la revendication 8, comprenant en outre l'étape consistant à
inspecter les données reçues par au moins un noeud frontal (FE1, FE2) et décider s'il convient ou non de bloquer le transfert des données reçues.

14. Procédé selon la revendication 8, dans lequel, après ladite réception des données et avant ladite transmission des données sélectionnées sur le réseau interne (NET2) à la destination, le deuxième noeud frontal (FE2) respectif peut modifier les données.

15. Procédé selon la revendication 5, dans lequel le premier noeud frontal (FE1) du réseau externe (NET1) est toujours isolé électriquement du deuxième noeud frontal (FE2) du réseau interne (NET2).

16. Procédé selon la revendication 15, consistant en outre à :
vérifier constamment, par une unité de commande, que le premier noeud frontal (FE1) du réseau externe (NET1) est toujours isolé électriquement du deuxième noeud frontal (FE2) du réseau interne (NET2).

17. Procédé selon la revendication 16, dans lequel la vérification du fait que le premier noeud frontal (FE1) du réseau externe (NET1) est toujours isolé électriquement du deuxième noeud frontal (FE2) du réseau interne (NET2) consiste à injecter une onde périodique sur les lignes de signaux provenant d'un noeud frontal (FE1, FE2) et détecter si l'onde est présente sur les lignes de signaux provenant de l'autre noeud frontal (FE1, FE2).

18. Procédé selon la revendication 16, dans lequel la vérification du fait que le premier noeud frontal (FE1) du réseau externe (NET1) est toujours isolé électriquement du deuxième noeud frontal (FE2) du réseau interne (NET2) consiste à générer un décalage de signal continu sur les lignes de signaux provenant d'un noeud frontal (FE1, FE2) et détecter s'il y a un décalage du signal continu sur les lignes de signaux d'un noeud frontal (FE1, FE2) différent.

19. Procédé selon la revendication 5, dans lequel il existe une pluralité de réseaux internes (NETA, NETB, NETC, NETD, NETE), chaque réseau comportant un noeud frontal de réseau (FEA, FEB, FEC, FED, FEE), avant ledit transfert de données du noeud frontal du réseau externe (NETA, NETB, NETC, NETD, NETE) à au moins un noeud intermédiaire, les noeuds frontaux (FEA, FEB, FEC, FED, FEE) de la pluralité de réseaux internes (NETA, NETB, NETC, NETD, NETE) sont isolés électriquement dudit au moins un noeud intermédiaire, et ledit transfert des données dudit au moins un noeud intermédiaire au noeud frontal (FEA, FEB, FEC, FED, FEE) dudit au moins un réseau interne comprend en outre les étapes consistant à :
isoler électroniquement ledit au moins un noeud intermédiaire du noeud frontal (FEA, FEB, FEC, FED, FEE) du réseau externe (NETA, NETB, NETC, NETD, NETE) ,
a) isoler électroniquement ledit au moins un noeud intermédiaire des noeuds frontaux (FEA, FEB, FEC, FED, FEE) de la totalité de la pluralité de réseaux internes (NETA, NETB, NETC, NETD, NETE) , sauf un,
b) transférer les données dudit au moins un noeud intermédiaire au noeud frontal (FEA, FEB, FEC, FED, FEE) d'un réseau interne (NETA, NETB, NETC, NETD, NETE) connecté, et
répéter a) et b) pour chacun de la pluralité de réseaux internes (NETA, NETB, NETC, NETD, NETE).

20. Procédé selon la revendication 5, dans lequel ledit au moins un noeud intermédiaire comprend un dispositif de mémorisation magnétique.

21. Procédé selon la revendication 20, dans lequel les données sont toujours écrites et lues à une même position du dispositif de mémorisation magnétique.

22. Procédé selon la revendication 5, dans lequel le premier noeud frontal (FE1) du réseau externe (NET1) est toujours déconnecté physiquement des extrémités avant de tous les réseaux.

23. Procédé selon la revendication 5, dans lequel ledit au moins un noeud intermédiaire comprend un dispositif de mémoire.

24. Procédé selon la revendication 5, dans lequel ledit au moins un noeud intermédiaire comprend un élément du groupe consistant en un ordinateur, un serveur, une station de travail, un ordinateur personnel ou un matériel dédié.

25. Procédé selon la revendication 1, consistant en outre à déterminer si les données ont été transférées avec succès à la destination sur le réseau interne (NET2).

26. Procédé selon la revendication 25, dans lequel
la détermination du fait que les données ont été transférées avec succès à la destination sur le réseau interne (NET2) consiste à déterminer si les données ont été transférées à la destination dans les limites d'une période de temps prédéterminée.

27. Procédé selon la revendication 1, dans lequel ledit réseau primitif (PN) n'est pas capable de transmettre des données du deuxième noeud frontal (FE2) du réseau interne (NET2) au premier noeud frontal (FE1) du réseau externe (NET1).

28. Procédé selon la revendication 1, comprenant en outre l'étape consistant à :
inspecter les données reçues par au moins un noeud frontal (FE2) et décider s'il convient ou non de bloquer le transfert des données reçues.

29. Procédé selon la revendication 1, dans lequel, après ladite réception des données et avant ladite transmission des données sélectionnées sur le réseau interne (NET2) à la destination, le deuxième noeud frontal (FE2) respectif peut modifier les données.

30. Procédé selon la revendication 1, dans lequel la transmission des données filtrées du premier noeud frontal (FE1) du réseau externe (NET1) au deuxième noeud frontal (FE2) du réseau interne (NET2) sur au moins un réseau primitif (PN) consiste à :
transmettre les données filtrées du premier noeud frontal (FE1) du réseau externe (NET1) à un noeud intermédiaire sur un premier réseau primitif (PN1) en utilisant une deuxième pile de protocoles de télécommunication différente de la première pile de protocoles de télécommunication ;
transmettre les données filtrées du noeud intermédiaire au deuxième noeud frontal (FE2) du réseau interne (NET2) sur un deuxième réseau primitif (PN2).

31. Procédé selon la revendication 30, comprenant en outre l'étape consistant à :
inspecter les données reçues par le noeud intermédiaire et décider s'il convient ou non de bloquer le transfert des données reçues.

32. Procédé selon la revendication 30, dans lequel, après ladite transmission des données filtrées du premier noeud frontal (FE1) du réseau externe (NET1) à un noeud intermédiaire sur un premier réseau primitif (PN1), le noeud intermédiaire peut modifier les données.

33. Procédé selon la revendication 5, dans lequel
le noeud intermédiaire comprend au moins des premier et deuxième dispositifs de mémorisation, et ledit transfert de données du premier noeud frontal (FE1) du réseau externe (NET1) à au moins un noeud intermédiaire consiste à connecter l'un des premier et deuxième dispositifs de mémorisation au premier noeud frontal (FE1) du réseau externe (NET1), tout en isolant électriquement ledit un des premier et deuxième dispositifs de mémorisation du deuxième noeud frontal (FE2) du réseau interne (NET2), et connecter l'autre des premier et deuxième dispositifs de mémorisation au deuxième noeud frontal (FE2) du réseau interne (NET2), tout en isolant électriquement l'autre des premier et deuxième dispositifs de mémorisation du premier noeud frontal (FE1) du réseau externe (NET1),
transférer les données du premier noeud frontal (FE1) du réseau externe (NET1) au dit un des premier et deuxième dispositif de mémorisation, tout en transférant les données du deuxième noeud frontal (FE2) du réseau interne (NET2) à l'autre des premier et deuxième dispositifs de mémorisation,
connecter ledit un des premier et deuxième dispositifs de mémorisation au deuxième noeud frontal (FE2) du réseau interne (NET2), tout en isolant électriquement ledit un des premier et deuxième dispositifs de mémorisation du premier noeud frontal (FE1) du réseau externe (NET1), et connecter l'autre des premier et deuxième dispositifs de mémorisation au premier noeud frontal (FE1) du réseau externe (NET1), tout en isolant électriquement l'autre des premier et deuxième dispositifs de mémorisation du deuxième noeud frontal (FE2) du réseau interne (NET2), et
transférer les données dudit un des premier et deuxième dispositifs de mémorisation au deuxième noeud frontal (FE2) du réseau interne (NET2), tout en transférant les données de l'autre des premier et deuxième dispositifs de mémorisation au premier noeud frontal (FE1) du réseau externe (NET1).

34. Procédé selon la revendication 1, dans lequel le deuxième noeud frontal (FE2) du réseau interne (NET2), avec la pile de protocoles de télécommunication dudit au moins un réseau primitif (PN), peut limiter les transmissions à partir dudit au moins un réseau primitif et vers celui-ci vers au moins l'une d'une destination spécifique dans le réseau interne et d'une source spécifique dans le réseau externe.

35. Procédé selon la revendication 1, consistant en outre à mettre en oeuvre le premier noeud frontal (FE1) du réseau externe (NET1), le deuxième noeud frontal (FE2) du réseau interne (NET2) et ledit au moins un réseau primitif (PN) par la même entité organisationnelle de sorte que l'entité organisationnelle commande le fonctionnement du premier noeud frontal (FE1) du réseau externe (NET1), du deuxième noeud frontal (FE2) du réseau interne (NET2) et dudit au moins un réseau primitif (PN).

36. Procédé selon la revendication 35, dans lequel ladite mise en oeuvre consiste à mettre en oeuvre le premier noeud frontal (FE1) du réseau externe (NET1), le deuxième noeud frontal (FE2) du réseau interne (NET2) et ledit au moins un réseau primitif (PN) dans le même bureau de l'entité organisationnelle.

37. Procédé selon la revendication 30, consistant en outre à mettre en oeuvre le premier noeud frontal (FE1) du réseau externe (NET1), le deuxième noeud frontal (FE2) du réseau interne (NET2), le premier réseau primitif (PN1), le noeud intermédiaire et le deuxième réseau primitif (PN2) par la même entité organisationnelle de sorte que l'entité organisationnelle commande le fonctionnement du premier noeud frontal (FE1) du réseau externe (NET1), du deuxième noeud frontal (FE2) du réseau interne (NET2), du premier réseau primitif (PN1), du noeud intermédiaire et du deuxième réseau primitif (PN2).

38. Procédé selon la revendication 37, dans lequel ladite mise en oeuvre consiste à mettre en oeuvre le premier noeud frontal (FE1) du réseau externe (NET1), le deuxième noeud frontal (FE2) du réseau interne (NET2), le premier réseau primitif (PN1), le noeud intermédiaire et le deuxième réseau primitif (PN2) dans le même bureau de l'entité organisationnelle.

39. Procédé selon la revendication 1, consistant en outre à fournir, par le deuxième noeud frontal (FE2) du réseau interne (NET2), des données pour encapsuler les données filtrées dans la troisième pile de protocoles de télécommunication.

40. Procédé selon la revendication 30, consistant en outre à fournir, par le deuxième noeud frontal (FE2) du réseau interne (NET2), des données pour encapsuler les données filtrées dans la troisième pile de protocoles de télécommunication.

41. Procédé selon la revendication 1, dans lequel ladite inspection empêche que les données de commande dans les données reçues sur le réseau externe (NET1) soient transférées au réseau interne (NET2).

42. Procédé selon la revendication 30, dans lequel ladite inspection empêche que les données de commande dans les données reçues sur le réseau d'origine (NET1) soient transférées au réseau interne (NET2).

43. Réseau informatique comprenant :
un réseau externe (NET1) comportant un premier noeud frontal (FE1) configuré pour recevoir des données conformes à une première pile de protocoles de télécommunication comprenant une première pluralité de couches,
un réseau interne (NET2) comportant un deuxième noeud frontal (FE2), dans lequel le réseau interne (NET2) communique en utilisant des données conformes à une troisième pile de protocoles de télécommunication comprenant une troisième pluralité de couches ; et
un réseau primitif (PN) pour transmettre des données et garantir un isolement de sécurité entre ledit réseau externe (NET1) et ledit réseau interne (NET2), ledit réseau primitif (PN) étant connecté au dit premier noeud frontal (FE1) et au dit deuxième noeud frontal (FE2), et étant dédié uniquement à la connexion du réseau interne (NET2) au réseau externe (NET1), ledit réseau primitif (PN) supportant une deuxième pile de protocoles de télécommunication différente desdites première et troisième piles de protocoles de télécommunication ;
ledit réseau primitif (PN) fournissant le mécanisme pour transférer des données entre lesdits premier (FE1) et deuxième (FE2) noeuds frontaux, de sorte que toute la communication de données entre le réseau externe (NET1) et le réseau interne (NET2) passe par ledit réseau primitif ;
dans lequel
- ledit premier noeud frontal (FE1) est configuré :
pour rompre toutes les couches de ladite première pile de protocoles de télécommunication, afin d'accéder aux informations dans lesdites couches ;
pour inspecter lesdites informations auxquelles un accès est effectué pour filtrer les données et décider quelles données doivent être envoyées au réseau interne (NET2) ;
pour encapsuler les données filtrées conformément à ladite deuxième pile de protocoles de télécommunication ;
- ledit réseau primitif est configuré pour transmettre les données encapsulées du premier noeud frontal (FE1) au deuxième noeud frontal (FE2) ;
- ledit deuxième noeud frontal (FE1) est configuré :
pour recevoir lesdites données encapsulées et, lorsqu'une destination finale des données transmises n'est pas le deuxième noeud frontal (FE2), pour rompre toutes les couches de ladite deuxième pile de protocoles de télécommunication, afin d'accéder aux informations dans lesdites couches ;
pour inspecter davantage lesdites informations auxquelles un accès est effectué pour filtrer davantage lesdites données reçues pour décider quelles données doivent être envoyées au réseau interne (NET2) ;
pour encapsuler lesdites données filtrées davantage conformément à ladite troisième pile de protocoles de télécommunication ;
pour transmettre lesdites données filtrées davantage du deuxième noeud frontal (FE2) à la destination, sur le réseau interne (NET2).

44. Réseau informatique selon la revendication 43, dans lequel la première pile de protocoles de télécommunication et la troisième pile de protocoles de télécommunication sont la même pile de protocoles de télécommunication.

45. Réseau informatique selon la revendication 44, dans lequel les première et troisième piles de protocoles de télécommunication comprennent des protocoles sélectionnés dans le groupe consistant en TCP/IP, DECnet et SNA.

46. Réseau informatique selon la revendication 43, dans lequel la pile de protocoles de télécommunication du réseau primitif (PN) comprend des protocoles sélectionnés dans la liste consistant en SCSI, SCSI-2, SCSI-3, SPI, Fast-20, Fast-40, LVD, port de données parallèle, port de données série, USB, RS-232, Ethernet, Token Ring, FDDI et ATM.

47. Réseau informatique selon la revendication 43, dans lequel le réseau primitif (PN) est en outre configuré pour transférer les données du premier noeud frontal (FE1) du réseau externe (NET1) à au moins un noeud intermédiaire et transférer ensuite les données dudit au moins un noeud intermédiaire au deuxième noeud frontal (FE2) du réseau interne (NET2).

48. Réseau informatique selon la revendication 47, dans lequel le réseau primitif (PN) comporte une pluralité de noeuds intermédiaires et est en outre configuré pour transférer les informations entre la pluralité de noeuds intermédiaires avant qu'elles ne soient transférées au deuxième noeud frontal (FE2) du réseau interne (NET2).

49. Réseau informatique selon la revendication 47, dans lequel ledit au moins un noeud intermédiaire comprend un dispositif de mémorisation magnétique.

50. Réseau informatique selon la revendication 49, dans lequel
le dispositif de mémorisation magnétique a un mode de lecture/écriture et un mode de lecture seule, et
le dispositif de mémorisation magnétique est normalement dans le mode de lecture seule et est mis dans le mode de lecture/écriture uniquement en réponse à un signal de commande.

51. Réseau informatique selon la revendication 49, dans lequel les données sont toujours écrites à une même position du dispositif de mémorisation magnétique.

52. Réseau informatique selon la revendication 47, dans lequel le premier noeud frontal (FE1) du réseau externe (NET1) est toujours déconnecté physiquement du deuxième noeud frontal (FE2) du réseau interne (NET2).

53. Réseau informatique selon la revendication 47, dans lequel ledit au moins un noeud intermédiaire comprend un dispositif de mémoire.

54. Réseau informatique selon la revendication 53, dans lequel la mémoire électronique comprend un élément de mémoire,
un circuit de commutation modifiant la connexion à l'élément de mémoire entre le premier noeud frontal (FE1) du réseau externe (NET1) et le deuxième noeud frontal (FE2) du réseau interne (NET2), et
une pluralité d'autres circuits, et
à l'exception de l'élément de mémo i re, la mémo i re électronique est configurée pour être réinitialisée pendant chaque changement d'état du circuit de commutation.

55. Réseau informatique selon la revendication 53, dans lequel
le dispositif de mémoire a un mode de lecture/écriture et un mode de lecture seule, et
le dispositif de mémoire est normalement dans le mode de lecture seule et est mis dans le mode de lecture/écriture uniquement en réponse à un signal de commande.

56. Réseau informatique selon la revendication 47, dans lequel ledit au moins un noeud intermédiaire comprend un ordinateur.

57. Réseau informatique selon la revendication 47, dans lequel le premier noeud frontal (FE1) du réseau externe (NET1) est toujours isolé électriquement du deuxième noeud frontal (FE2) du réseau interne (NET2).

58. Réseau informatique selon la revendication 57, comprenant en outre :
des moyens pour vérifier constamment que le premier noeud frontal (FE1) du réseau externe (NET1) est toujours isolé électriquement du deuxième noeud frontal (FE2) du réseau interne (NET2).

59. Réseau informatique selon la revendication 58, dans lequel les moyens pour vérifier constamment que le premier noeud frontal (FE1) du réseau externe (NET1) est toujours isolé électriquement du deuxième noeud frontal (FE2) du réseau interne (NET2) comprennent :
un générateur d'onde périodique générant une onde périodique sur les lignes connectées au noeud frontal (FE1, FE2) de l'un du réseau interne (NET2) et du réseau externe (NET1), et
un détecteur détectant la présence de l'onde périodique sur les lignes connectées au noeud frontal (FE1, FE2) de l'un du réseau externe (NET1) et du réseau interne (NET2).

60. Réseau informatique selon la revendication 47, dans lequel
ledit au moins un noeud intermédiaire comprend un circuit pour éviter que le deuxième noeud frontal (FE2) du réseau interne (NET2) ne transfère des données au dit au moins un noeud intermédiaire.

61. Réseau informatique selon la revendication 47, comprenant en outre des moyens pour déterminer si les données ont été transférées avec succès au deuxième noeud frontal (FE2) du réseau interne (NET2) à partir du réseau d'origine (NET1) par l'intermédiaire dudit au moins un noeud intermédiaire en déterminant si les données ont été transférées au deuxième noeud frontal (FE2) du réseau interne (NET2) dans les limites d'une période de temps prédéterminée.

62. Réseau informatique selon la revendication 43, dans lequel ledit réseau primitif (PN) n'est pas capable de transmettre des données du deuxième noeud frontal (FE2) du réseau interne (NET2) au premier noeud frontal (FE1) du réseau externe (NET1).

63. Réseau informatique selon la revendication 43, comprenant en outre :
des moyens pour inspecter les données reçues au niveau de chaque noeud frontal (FE1, FE2) et pour décider s'il convient ou non de bloquer le transfert des données reçues au niveau de chaque noeud frontal (FE1, FE2).

64. Réseau informatique selon la revendication 43, dans lequel le noeud frontal (FE1, FE2) d'au moins l'un du réseau externe (NET1) et du réseau interne (NET2) inspecte et modifie les données reçues par l'intermédiaire dudit au moins un réseau primitif (PN).

65. Réseau informatique selon la revendication 47, dans lequel ledit au moins un noeud intermédiaire comprend un circuit de commutation configuré pour connecter ledit au moins un noeud intermédiaire au premier noeud frontal (FE1) du réseau externe (NET1), tout en isolant électriquement le noeud intermédiaire du deuxième noeud frontal (FE2) du réseau interne (NET2), et pour connecter ensuite ledit au moins un noeud intermédiaire au deuxième noeud frontal (FE2) du réseau interne (NET2), tout en isolant électriquement le noeud intermédiaire du premier noeud frontal (FE1) du réseau externe (NET1).

66. Réseau informatique selon la revendication 65, dans lequel ledit au moins un noeud intermédiaire comprend en outre un dispositif de mémorisation pour mémoriser les données transférées par les noeuds frontaux (FE1, FE2) respectifs, et à l'exception du dispositif de mémorisation, tous les éléments du noeud intermédiaire sont configurés pour être réinitialisés pendant chaque changement de connexion du circuit de commutation.

67. Réseau informatique selon la revendication 42, dans lequel le premier noeud frontal (FE1), le deuxième noeud frontal (FE2) et ledit au moins un réseau primitif (PN) sont mis en oeuvre par la même entité organisationnelle de sorte que l'entité organisationnelle commande le fonctionnement du premier noeud frontal (FE1), du deuxième noeud frontal (FE2) et dudit au moins un réseau primitif (PN).

68. Réseau informatique selon la revendication 66, dans lequel le premier noeud frontal (FE1), le deuxième noeud frontal (FE2) et ledit au moins un réseau primitif (PN) sont mis en oeuvre au niveau du même bureau de l'entité organisationnelle.

69. Réseau informatique selon la revendication 42, dans lequel le deuxième noeud frontal (FE2) est configuré pour fournir des données pour encapsuler les données filtrées au moins dans ladite deuxième pile de protocoles de télécommunication.

70. Réseau informatique selon la revendication 42, dans lequel ledit réseau externe (NET1) est configuré pour empêcher que les données de commande parmi les données reçues sur le réseau externe (NET1) soient transférées au réseau interne (NET2).

71. Support pouvant être lu par une machine sur lequel sont mémorisées des instructions exécutables par une machine pour effectuer le procédé consistant à transmettre des données et à garantir un isolement de sécurité selon les revendications 1 à 42.
